(19) Europäisches Patentamt
European Patent Office
Office européen des brevets

(11) **EP 4 214 954 B1**

(12) **EUROPEAN PATENT SPECIFICATION**

(45) Date of publication and mention
of the grant of the patent:
**03.12.2025 Bulletin 2025/49**

(21) Application number: **20780587.0**

(22) Date of filing: **17.09.2020**

(51) International Patent Classification (IPC):
*H04W 36/00* (2009.01)    *H04W 24/02* (2009.01)

(52) Cooperative Patent Classification (CPC):
H04W 24/02; H04W 36/008357

(86) International application number:
**PCT/EP2020/075963**

(87) International publication number:
**WO 2022/058013 (24.03.2022 Gazette 2022/12)**

(54) **METHODS AND APPARATUSES FOR HANDOVER PROCEDURES**

VERFAHREN UND VORRICHTUNGEN FÜR ÜBERGABEVERFAHREN

PROCÉDÉS ET APPAREILS POUR PROCÉDURES DE TRANSFERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **Telefonaktiebolaget LM Ericsson
(publ)**
**164 83 Stockholm (SE)**

(72) Inventors:
• **SHALMASHI, Serveh**
**182 48 Enebyberg (SE)**
• **GHADIMI, Euhanna**
**168 40 Bromma (SE)**

(74) Representative: **Zacco Sweden AB**
**P.O. Box 5581**
**Löjtnantsgatan 21**
**114 85 Stockholm (SE)**

(56) References cited:
**US-A1- 2019 068 443**

• **KUMARI SAVITA ET AL: "Data-driven handover
optimization in small cell networks", WIRELESS
NETWORKS, ACM, 2 PENN PLAZA, SUITE 701 -
NEW YORK USA, vol. 25, no. 8, 8 August 2019
(2019-08-08), pages 5001 - 5009, XP036924862,
ISSN: 1022-0038, [retrieved on 20190808], DOI:
10.1007/S11276-019-02111-6**
• **JOEL SHODAMOLA ET AL: "A Machine Learning
based Framework for KPI Maximization in
Emerging Networks using Mobility Parameters",
ARXIV.ORG, CORNELL UNIVERSITY LIBRARY,
201 OLIN LIBRARY CORNELL UNIVERSITY
ITHACA, NY 14853, 4 May 2020 (2020-05-04),
XP081658737**
• **PAULO VALENTE KLAINE ET AL: "A Survey of
Machine Learning Techniques Applied to Self-
Organizing Cellular Networks", IEEE
COMMUNICATIONS SURVEYS AND TUTORIALS,
1 January 2017 (2017-01-01), New York, pages
2392 - 2431, XP055767827, Retrieved from the
Internet <URL:https://www.researchgate.net/
profile/Paulo_Valente_Klaine/publication/318476
403_A_Survey_of_Machine_Learning_Techniqu
es_Applied_to_Self_Organizing_Cellular_Netwo
rks/links/5b8fd3c092851c6b7ec0979f/
A-Survey-of-Machine-Learning-Techniques-Ap
plied-to-Self-Organizing-Cellular-Networks.pdf>
DOI: 10.1109/COMST.2017.2727878**

## Description

## Technical Field

Embodiments of the disclosure generally relate to methods in a network node of a communication network and, more particularly, to methods and apparatuses relating to handover procedures.

## Background

This section introduces aspects that may facilitate better understanding of the present disclosure. Accordingly, the statements of this section are to be read in this light and are not to be understood as admissions about what is in the prior art or what is not in the prior art.

Mobility management is an important aspect of cellular networks because it allows user equipment (UE) to move anywhere within a coverage area at any time with minimal interruption. One of the processes of radio access mobility is the handover (HO) mechanism.

In a cellular network, handover is one of the most complex mechanisms. There are many types of handovers. For example, handovers may be initiated by either mobile stations or network elements to transfer between different channels, cells, base stations (eNodeB), or different systems, technologies etc. Handover may occur, for example, when a UE finds another cell that provides better service than its serving cell, or handover may occur for load balancing purposes, in which a UE moves from a high loaded cell to a less loaded cell. Examples of handover procedures may be found in M. Tayyab, X. Gelabert, and R. Jäntta, "A Survey on Handover Management: From LTE to NR." IEEE Access, August 2019.

As an example, in UE-assisted-Network-Controlled handover, a handover procedure involves downlink measurements that are used for making a mobility decision. Based on the measurement of either reference signal received power (RSRP) or reference signal received quality (RSRQ) (or both) which indicate the quality of a received signal from a neighboring base station, a signaling mechanism may be triggered by the User Equipment (UE) in which measured signals are sent to the serving base station as a measurement report (MR) for the mobility decision. The base station then decides whether a handover is to be performed.

US Patent number US9839005-B2 discloses methods and apparatus for mobile terminal-based radio resource management and wireless network optimization. US 2019/068443 A1 discloses technology for automatically configuring parameters in a wireless communication network, such as a cellular network.

S. Neil, H. David, G. Ian, I. James, A. Robert, "Parameter Optimization for LTE Handover using an Advanced SOM Algorithm", 2006 IEEE 63rd Vehicular Technology Conference, 2013 discloses a modified Self Organizing Map which is used in the context of Long-term Evolution (LTE) handover procedures.

Kumari, S., Singh, B. Data-driven handover optimization in small cell networks. Wireless Netw 25, 5001-5009 (2019). https://doi.org/10.1007/s11276-019-02111-6 discloses data-driven handover optimization approach aiming to mitigate the mobility problems including handover delay, early handover, wrong selection of target cell and frequent handover.

J. Shodamola, U. Masood, M. Manalastas and A. Imran, "A Machine Learning based Framework for KPI Maximization in Emerging Networks using Mobility Parameters," 2020 IEEE International Black Sea Conference on Communications and Networking (BlackSeaCom), Odessa, Ukraine, 2020, pp. 1-6, doi: 10.1109/BlackSeaCom48709.2020.9235020 discloses a machine learning-based framework combined with a heuristic technique to discover the optimal combination of two pertinent COPs used in mobility, Cell Individual Offset (CIO) and Handover Margin (HOM), that maximizes a specific Key Performance Indicator (KPI) such as mean Signal to Interference and Noise Ratio (SINR) of all the connected users.

## Summary

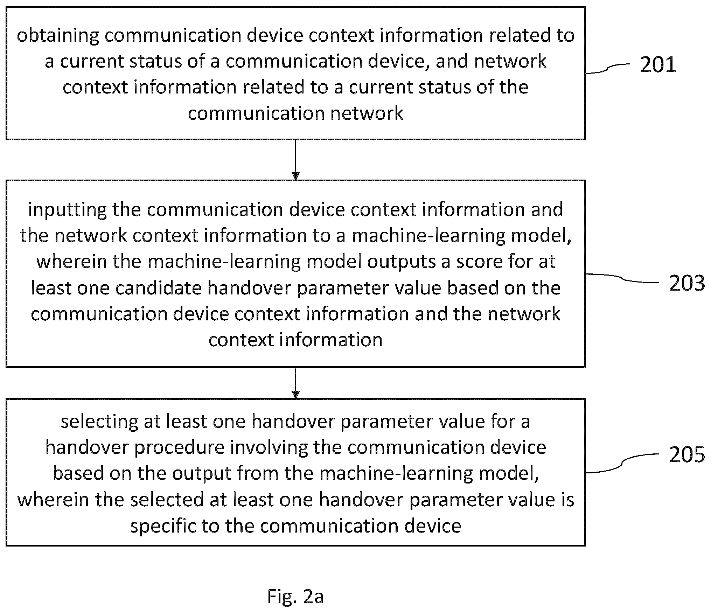

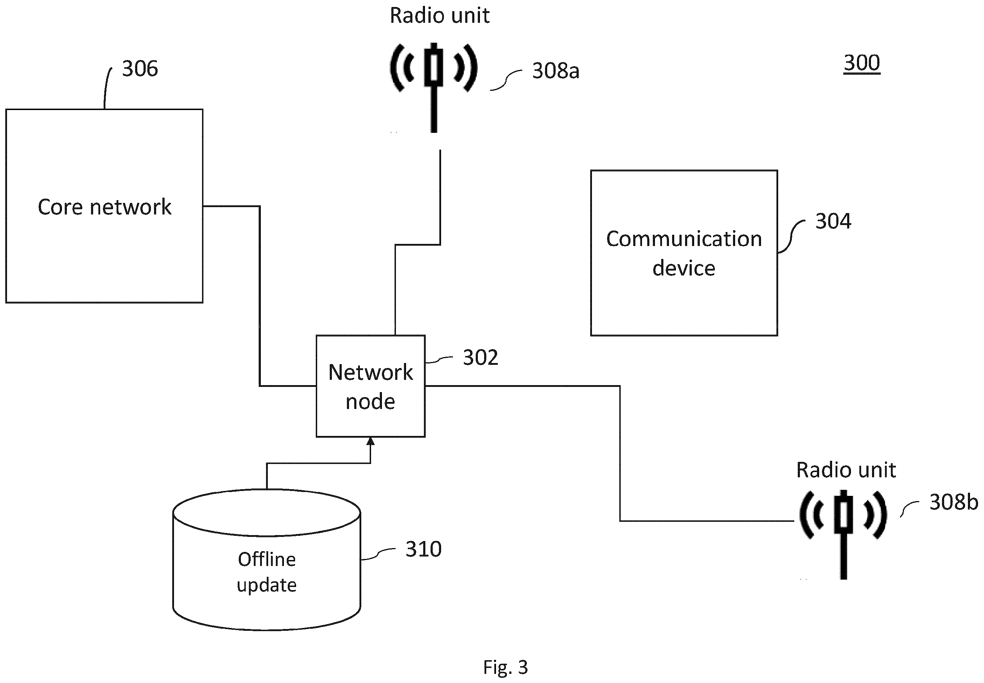

In the following the invention is best understood in view of figure 2A and 3 and the associated passages. The remaining embodiments, aspects and examples disclosed below are included for illustrative purpose and for facilitating the understanding of the invention.

The present invention defines a method implemented in a network node of a communication network according to independent claim 1 and a corresponding network node according to independent claim 17. Preferred embodiments are defined in the dependent claims.

This summary is provided to introduce a selection of concepts in a simplified form that are further described below in the detailed description. This summary is not intended to identify key features or essential features of the claimed subject matter, nor is it intended to be used to limit the scope of the claimed subject matter.

Handover procedures may be resource-consuming and therefore costly to the network operator. Moreover, optimal settings of the handover procedure depend on momentary radio conditions, which makes them difficult to control. It is desirable to develop processes for handover which address these issues.

One of the objects of the disclosure is to provide an improved solution for handover for a communication device.

According to an aspect of the disclosure, there is provided a method implemented in a network node of a communication network. The method comprises obtaining communication device context information related to a current status of a communication device, and network context information related to a current status of the communication network. The method also comprises inputting the communication device context information and the network context information to a machine-learning model. The machine-learning model outputs a score for at least one candidate handover parameter value based on the communication device context information and the network context information. The method further comprises selecting at least one handover parameter value for a handover procedure involving the communication device based on the output from the machine-learning model, wherein the selected at least one handover parameter value is specific to the communication device.

Thus, a method is provided in which a network node uses a machine-learned model to determine handover parameter values for a specific communication device for which a handover procedure is to be performed. Therefore, the handover parameter values are tailored so as to be optimal for the specific communication device. In a further example, the method may be performed for a plurality of communication devices in the communication network, where different handover parameter values may be selected for each communication device. Therefore, the handover parameter values may be individually tailored to each communication device in the communication network.

The method may further comprise inputting at least one candidate handover parameter value to the machine-learning model (along with the communication device context information and the network context information).

The score may indicate the impact of using the candidate handover parameter value during the handover procedure. The impact of using the candidate handover parameter value during the handover procedure may comprise a metric measuring the quality of the handover procedure.

The selecting may comprise at least one of: sampling from a probability mass function of the scores; selecting the handover parameter value corresponding to a maximum value of the scores; and selecting the handover parameter value at random from the handover parameter value corresponding to a predetermined number of the top scores.

The output of the machine-learning model may comprise a key performance indicator, KPI. The output of the machine-learning model may comprise a probability mass function of the score defined over the at least one candidate handover parameter value.

A plurality of candidate handover parameter values may be input to the machine-learning model, wherein the plurality of candidate handover parameter values may comprise sets of candidate handover parameter values, and wherein candidate handover parameter values within the same set may (each) correspond to a different type of handover parameter. The selecting may comprise selecting a set of handover parameter values based on the output from the machine-learning model.

The at least one candidate handover parameter value may comprise candidate handover parameter values corresponding to different types of handover parameter.

The at least one candidate handover parameter value may be chosen for input to the machine-learning model from a predefined set of possible candidate handover parameters. The at least one candidate handover parameter value may be chosen from the predefined set of possible candidate handover parameters based on one of: field experiments; and simulation studies.

The at least one handover parameter value may comprise a threshold value or offset value. The at least one handover parameter value may be usable to determine whether handover related measurements are to be reported by the communication device in the handover procedure.

One of the at least one candidate handover parameter value may correspond to a handover parameter type comprising one of: time to trigger, TTT; a handover hysteresis margin, HM; a hysteresis parameter, Hys; a measurement result of a cell; a threshold parameter, Thresh; a filter coefficient, K; an offset parameter; a cell individual offset, CIO; and a frequency offset.

The machine-learning model may be trained using training data and training labels. The training data may comprise groups comprising training communication device context information, training network context information, and at least one training candidate handover parameter values for a handover procedure involving the communication device. The training labels may comprise a training score for each of the at least one training candidate handover parameter values of the training data, the training score indicating the impact of using the training handover candidate parameter value during a handover procedure.

The communication device context information may comprise signal timing measurements. The signal timing measurements may comprise at least one of: timing advance measurement associated with the communication device; measurements of time the signal takes to reach the network node from the communication device; and measurements of time the signal takes to reach the communication device from the network node and time the signal takes to reach the network node from the communication device.

The communication device context information may comprise signal power measurements.

The signal power measurements may comprise at least one of: reference signal received power, RSRP, measurements for downlink or uplink reference signals; and signal attenuation measurements between the communication device and the network node. The RSRP measurements may comprise at least one of: channel state information reference signals, CSI-RS; channel sounding reference signals, SRS; cell-specific reference signals, CRS; synchronization reference signals; primary and secondary synchronization reference signals, PSS, SSS, respectively; and synchronization signals and/or PBCH Blocks , SSB or SS/PBCH block.

The communication device context information may comprise signal quality measurements. The signal quality measurements may comprise at least one of: reference signal received quality, RSRQ, measurements; interference measurement for a communication link between the communication device and the network node in uplink or in downlink; and measurements related to uplink or downlink signal to noise ratio, SINR

The communication device context information may comprise at least one of: a quality of service, QoS, requirement for communication between the communication device and the network node; speed and trajectory of the communication device; and location information indicating the location of the communication device.

The network context information may comprise network usage measurements. The network usage measurements may comprise at least one of: traffic load in one or more radio cells of the network node serving the communication device; radio resource utilization in one or more radio cells of the network node serving the communication device; traffic load in one or more radio cells of one or more neighboring radio nodes; radio resource utilization in one or more radio cells of one or more neighboring radio nodes; type of traffic in neighboring cells or radio network nodes; distribution of traffic in neighboring cells or radio network nodes; and load of neighboring cells.

The network context information may comprise signal propagation measurements. The signal propagation measurements may comprise at least one of: propagation loss measurements of radio signals from or to a serving network node; propagation loss measurements of radio signals to or from the communication device; propagation loss measurements of radio signals from or to one or more interfering network nodes; and propagation loss measurements of radio signals to or from the communication device.

The network context information may comprise signal interference measurements. The signal interference measurements may comprise at least one of: interference measurements of radio signals from or to one or more interfering network node; interference measurements of radio signals to or from the communication device; and interference measurements of radio signals from or to a serving network node and one or more interfering communication device.

The network context information may comprise at least one of: a network key performance indicator, KPI, associated with one or more cells of the network; a number of neighboring cells or radio network nodes that are able to interfere with the communication device; the type of neighboring cells; the type of radio network nodes; mobility settings parameters; and a metric for measuring the handover performance of one or more cells.

The KPI may be at least one of: successful packet delivery rate; successful packet arrival rate; throughput; spectral efficiency; latency; packet loss rate;

and call drop rate.

The method may further comprise sending the selected at least one handover parameter value to the communication device.

The steps of the method may be repeated for each of a plurality of communication devices in the network.

The machine-learning model may comprise at least one of: a supervised learning model; a neural network model; and a supervised machine learning algorithm.

The network node may be at least one of: a radio node; an access point; a base station; a centralized digital unit; a remote radio unit; a network controller; and a virtual network node.

The handover procedure may comprise at least one of: inter-frequency handover; intra-frequency handover; inter-cell layer handover; intra-cell layer handover; inter-RAT handover; intra-RAT handover; inter-operator handover; intra-operator handover.

According to an aspect of the disclosure, there is provided a method implemented in a system comprising a communication device and a network node, the method comprising: at the network node, performing the method as claimed in any preceding claim; and, at the communication device: sending communication device context information to a network node; obtaining the at least one handover parameter value selected by the network node; and operating on the basis of the obtained at least one handover parameter.

The method may further comprise the communication device performing a handover procedure using the selected at least one handover parameter value.

According to an aspect of the disclosure, there is provided a network node for use in a communication network, wherein the network node comprises processing circuitry and a memory containing instructions executable by the processing circuitry, whereby the network node is operable to: obtain communication device context information related to a current status of a communication device and network context information related to a current status of the communication network; input the communication device context information and the network context information to a machine-learning model, wherein the machine-learning model outputs a score for at least one candidate handover parameter value based on the communication device context information and the network context information; and select at least one handover parameter value for a handover procedure involving the communication device based on the output from the machine-learning model, wherein the selected at least one handover parameter value is specific to the communication device.

The network node may be configured to perform the methods as described herein.

According to an aspect of the disclosure, there is provided a system comprising the network node and a communication device, wherein the communication device comprises processing circuitry and a memory containing instructions executable by the processing circuitry, whereby the communication device is operable to: send communication device context information to the network node; obtain the at least one handover parameter value selected by the network node; and operate on the basis of the obtained at least one handover parameter.

The system may be operable to perform the methods as described herein.

According to an aspect of the disclosure, there is provided a computer program comprising instructions which, when the program is executed by a computer, cause the computer to carry out the methods described herein.

According to an aspect of the disclosure, there is provided a carrier containing the computer program, wherein the carrier is one of an electronic signal, optical signal, radio signal, or computer readable storage medium.

According to an aspect of the disclosure, there is provided a computer-readable medium comprising instructions which, when executed on a computer, cause the computer to carry out the methods described herein.

According to an aspect of the disclosure, there is provided a network node for use in a communication network, wherein the network node comprises: an obtaining unit configured to obtain communication device context information related to a current status of a communication device and network context information related to a current status of the communication network; an input unit configured to input the communication device context information and the network context information to a machine-learning model, wherein the machine-learning model outputs a score for at least one candidate handover parameter value based on the communication device context information and the network context information; and a selecting unit configured to select at least one handover parameter value for a handover procedure involving the communication device based on the output from the machine-learning model, wherein the selected at least one handover parameter value is specific to the communication device.

According to an aspect of the disclosure, there is provided a system comprising the network node and a communication device, wherein the communication device comprises: a sending unit configured to send communication device context information to the network node; an obtaining unit configured to obtain the at least one handover parameter value selected by the network node; and an operating unit configured to operate the communication device on the basis of the obtained at least one handover parameter.

## Brief Description of the Drawings

These and other objects, features and advantages of the disclosure will become apparent from the following detailed description of illustrative examples thereof, which are to be read in connection with the accompanying drawings.

FIG. 1 is a diagram illustrating a handover procedure;
FIG. 2a is a diagram illustrating a method in a network node according to an example;
FIG. 2b is a diagram illustrating a method in a communication device according to all embodiments of the present invention;
FIG. 3 is a diagram illustrating a network according to an example;
FIG. 4 is a diagram illustrating signaling between components of a network according to an example;
FIG. 5 is a diagram illustrating information flow between components of a network according to an example;
FIG. 6 is a diagram illustrating information flow in a handover parameter value selection module according to an example;
FIG. 7 is a diagram illustrating the inputs and outputs of a machine learning model;
FIG. 8 is a diagram illustrating methods for selecting handover parameters from the output of a machine learning model;
FIG. 9 is a diagram illustrating a network node according to an example;
FIG. 10 is a diagram illustrating a network node according to an example;
FIG. 11 is a diagram illustrating a communication device according to an example; and
FIG. 12 is a diagram illustrating a communication device according to an example.

## Detailed Description

For the purpose of explanation, details are set forth in the following description in order to provide a thorough understanding of the examples disclosed. It is apparent, however, to those skilled in the art that the examples may be implemented without these specific details or with an equivalent arrangement.

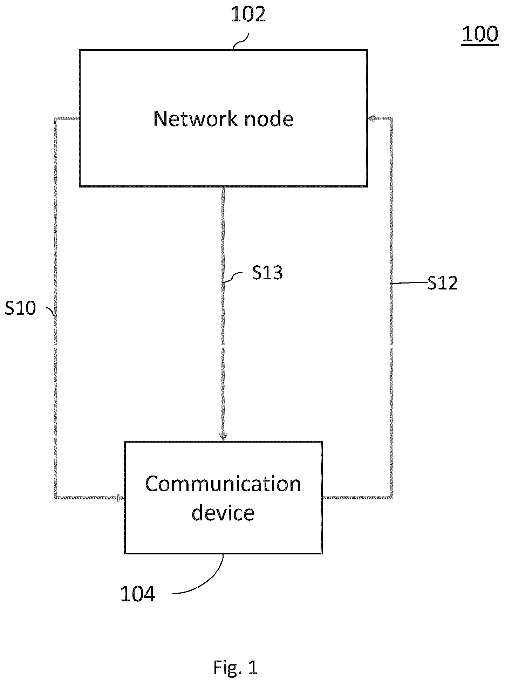

Fig. 1 illustrates an example of a handover procedure involving handover mechanisms in a network 100 (a wireless network). The network 100 comprises a network node, in this case a base station 102 (in particular a serving base station) in communication with a communication device 104 (in this example a UE). In this example, the network is configured with standard handover parameters for determining whether handover should take place for the communication device 104. Handover parameters are a set of variables (thresholds, offsets, timers, filter coefficients etc.) which are used to determine whether handover related measurements should be reported by the communication device (for example, in the form of a measurement report). The handover parameters may be referred to herein as handover parameter values, where a handover parameter value corresponds to a particular value of variable. The handover parameter values may equally be referred to as handover hyperparameters (HO HP).

Particular handover parameter values may be used to determine whether handover related measurements should be reported by the communication device 104. In this example, a handover decision is triggered at the communication device 104 on the basis of standard handover parameters (handover parameter values) defined by the network 100. As is indicated as step S10, handover parameter values are sent from the network node 102 to the communication device 104. The handover parameter values may be, for example, values of cell offset, hysteresis margin, TTT etc.. The handover mechanism may involve the use of downlink measurements, the filtering of measured samples, a handover hysteresis margin or "HO hysteresis", a "Time to Trigger" (TTT) parameter as well as several offset parameters. Types of handover parameter for which handover parameter values may be set may include: time to trigger, TTT; a handover hysteresis margin, HM; a filter coefficient, K; an offset parameter; a cell individual offset, CIO; a handover threshold; and a frequency offset.

The handover parameters (handover parameter values) are thus sent to the communication device (Step S10). In this example, the threshold and/or offset values of the respective handover parameters are set according to the measurement configurations (handover parameter values) sent by the serving network node. The communication device periodically measures the channel quality of serving and neighboring cells. The communication device compares the measured channel quality to handover parameters, and in some cases additional measurement values, and reports the measurement results as a measurement report signal (MR) to the network node 102 (Step S12) only if certain handover conditions are satisfied. Handover may be initiated if the link quality of a cell other than the cell serving the communication device is determined to be better than the link quality of the cell serving the communication device by a hysteresis value. This may be termed the entry condition. Handover may be initiated only if a triggering requirement is fulfilled for a given time interval (e.g. TTT). To initiate handover, a measurement report (RSRP, RSRQ) may be sent from the communication device 104 to the network node 102. Measurement Reports in 4G LTE or NR may be a way for a communication device to keep track of different signal strength measurements of neighboring cells and report to the network node (e.g. eNodeB/-gNB) if certain conditions for handover are met. These conditions, which may be reported as Measurement Reports, assist the network node in making handover decisions. The type of measurement to be included is conveyed by the network node to the communication device, and the list of types of measurement to be included may be brief or comprehensive based on network's request. The measurement report may include a list of signal strength of serving and neighboring cells in the same frequency and /or different carrier.

The network node 102 may make a handover decision on the basis of a received measurement report signal. The network node 102 may then send the handover decision to the communication device 104 (step S13). The handover decision may be a decision on whether the UE is to perform handover.

Due to the possible fluctuations in the radio channel, the communication device 104 may not trigger the measurement report signal (Step S12) by comparing the instantaneous radio channel measurement to a threshold, but may instead perform local measurement processing to average-off the fluctuations and prevent unnecessary handovers (e.g. ping pong effects) before triggering the measurement report signal. The communication device, therefore, may perform measurement averaging over some measurement bandwidth, and implement a hysteresis loop whereby the average measurement from the neighboring cell are required to be larger than a given offset during a specified amount of time (e.g. TTT). As an example, in LTE, both Layer 1 (L1) and Layer 3 (L3) filtering may be implemented to introduce a certain level of averaging.

In addition, several offset values (cell-specific, frequency-specific etc.) may be used to determine entering and leaving conditions for transmission of the measurement report (MR). Furthermore, these entering and leaving conditions should be fulfilled during a specified amount of time, which for LTE is the TTT. Essentially, a communication device may not transmit its measurement report to the network node before the TTT timer expires (the communication device transmits the measurement report to the serving cell once the TTT timer expires). Hereby, TTT is a time window which starts after a handover condition has been fulfilled. Thus, after an event occurs in which handover conditions are fulfilled, before sending the measurement report, the same event conditions must be preserved within a given duration (TTT). This helps to ensure that ping-pong effects are minimized due to fluctuations in the link qualities from different cells. During the TTT duration, if a leaving condition (handover condition) for measurement report transmission is satisfied (e.g. throughout the whole TTT duration), the communication device leaves the event triggering phase in which the UE has been collecting measurements, and transmits the measurement report.

The values that may be assigned to the TTT may be 0, 40, 64, 80, 100, 128, 160, 256, 320, 480,512, 640, 1024, 1280, 2560 and 5120 ms, as is defined for LTE. According to the LTE specification a hysteresis margin value may be a positive number between 0 and 15. Cell Individual Offsets (CIO) may be a number between -24 and 24 dB. Filter coefficient (K) may be equal to 0 or 4 or 8.

The handover procedure in New Radio (NR) is similar to the procedure in LTE, whereby the network controls communication device mobility based on communication device measurement reporting. NR implements both a beam level and cell level handover while LTE only implements cell level handover. A survey of existing handover mechanisms in LTE and NR may be found in M. Tayyab, X. Gelabert, and R. Jäntta, "A Survey on Handover Management: From LTE to NR". IEEE Access · August 2019. The methods described herein may be applied to any handover procedure in LTE or NR.

Incorrect handover parameter settings may negatively affect user experience and result in wasted network resources by causing handover ping-pongs, handover failures and radio link failures (RLF). Handover-related failures can be categorized as follows: failures due to too late handover triggering; failures due to too early handover triggering; and failures due to handover to a wrong cell.

While some handover failures are recoverable and invisible to the user, RLFs caused by incorrect handover parameter settings may have a combined impact on user experience and network resources. Therefore, it is desirable to reduce the number of handover-related RLFs. Furthermore, non-optimal configuration of handover parameters, even if it does not result in RLFs, may lead to degradation of the service performance. An example of such a situation is an incorrect setting of the handover hysteresis, which may cause either a ping-pong effect or prolonged connection to non-optimal cell. Thus, it is desirable to reduce the inefficient use of network resources due to unnecessary or missed handovers.

The handover parameter values that are set for the network may be selected in order to try to provide a balance between reliability of handover and frequency of handover. There are various considerations for the optimization of handover parameter configuration and the impact of mobility and load on those settings at a cell level. For example, in LTE intra-frequency handover reliability is dictated by the incidence of too late handovers. These failure events may be reduced by timing the handover earlier, but at the cost of an increased handover frequency.

Furthermore, mobile networks typically form dynamic structures, where new sites are deployed, capacity extensions are made, and system parameters are adapted to local conditions continuously. In the past, mobile network operators spent significant efforts such as drive testing and log processing in order to fine tune site-specific handover parameters. In order to reduce the requirement for human intervention, certain degrees of automation were applied to network optimization process. By introduction of self-organized network (SON), the problem of handover parameter optimization may be addressed autonomously under the mobility robustness optimization (MRO) use case. However, such approaches may only address setting the parameters at the network or cell level and ignore the subtle difference in radio condition and speed of each communication device as well as the heterogeneity of underlying network.

In homogeneous deployments, communication devices use the same set of handover parameters (such as time to trigger (TTT) and hysteresis margin (HM)) throughout the network. However, using the same set of parameters in heterogonous networks such as those used for NR would degrade mobility performance. For example, in LTE, the intra-frequency handover measurement period is usually 200 ms. Such a time period is too infrequent to react to the sudden channel changes due to high mobility speed, cell densification, or higher frequency in new radio (NR). One of the main distinguishing factors of high mobility communications is the fast time variation of the fading channel caused by the large Doppler spread. It is difficult to accurately estimate, track, and predict the fast time-varying fading coefficients.

Mobility management in high speed scenarios faces the challenges of (1) frequent handovers, (2) high penetration loss (3) heavy signaling overheads due to group mobility, and (4) fast mobility management procedures such as cell selection. A further issue is the setting of reliable handover parameters that efficiently handle high data-rates for moderate-to-high speed users, particularly in an urban environment. Of particular interest is the handover of fast moving communication devices (vehicles) since these suffer higher failure rates (for the same set of handover parameters) and higher handover rates than slow moving communication devices.

In order to improve the performance of handover mechanism, handover parameters may require optimization in lower granularity. The handover parameters may be based on communication device speed, radio network deployment, propagation conditions and system load. Furthermore, the handover parameters may be optimized in lower granularity at the user level as well as at the cell level.

Methods for selecting handover parameters on a per-communication device basis, where optimal handover parameters may be selected for a particular communication device, are described below. Such methods may advantageously allow selection of optimal handover parameters (handover parameter values) for a communication device in a network. Such optimal parameters may provide a balance between reliability of handover and frequency of handover for a specific communication device.

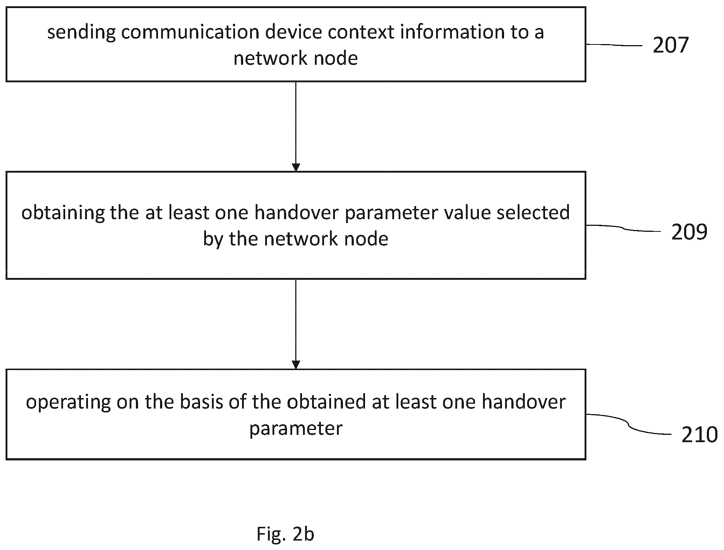

A method according to all embodiments of the present invention is illustrated in Fig. 2. In particular, Fig. 2a illustrates a method for determining the handover parameters performed by a network node of a (radio) communication network, which includes a step of obtaining communication device context information related to a current status of a communication device, and network context information related to a current status of the communication network (201). The method further comprises the step of inputting the communication device context information and the network context information to a machine-learning model, wherein the machine-learning model outputs a score for at least one candidate handover parameter value based on the communication device context information and the network context information (203). The method further comprises the step of selecting at least one handover parameter value for a handover procedure involving the communication device based on the output from the machine-learning model, wherein the selected at least one handover parameter value is specific to the communication device (205). Thus, a method is provided in which a network node uses a machine-learned model to determine handover parameter values for a specific communication device for which a handover procedure is to be performed. Therefore, the handover parameter values are tailored so as to be optimal for the specific communication device. In a further example, the method may be performed for a plurality of communication devices in the communication network, where different handover parameter values may be selected for each communication device. Therefore, the handover parameter values may be individually tailored to each communication device in the communication network.

The method may further comprise inputting at least one candidate handover parameter value to the machine-learning model along with the communication device context information and the network context information. The output of the model, in particular the scores, may correspond to the input at least one candidate handover parameter value. An advantage of inputting the at least one candidate handover parameter compared to a method in which a candidate handover parameter value is not input to the machine-learning model is that a selection of handover parameter values may be assessed, rather than a fixed or predetermined number of handover parameter values (e.g. all potential handover parameter values for a network).

The method may be based on communication device specific recommendations and may target lower granularity handover decisions at a user level, compared to existing handover mechanisms at a cell level which may be fixed for different communication devices within the cell. Furthermore, by recommending an optimal set of handover parameter values for different communication devices it may be possible to provide better resource utilization, power saving and improved QoS and QoE.

The aforementioned method is implemented in the network node (rather than in a communication device). The machine-learning model may be trained at the network node based on historical data collected from lots of communication devices performing handover procedures with different types of traffic and mobility. Such information is only available at the network side and individual communication devices are not able to collect and use it in order to make HO decisions. It is therefore advantageous to perform the method at the network node. The machine-learning model may comprise at least one of: a supervised learning model; a neural network model; and a supervised machine learning algorithm. The machine-learning model may be trained at the network node or a trained machine-learning model may be provided to the network node. The machine-learning model may be provided to the network node by another network entity such as a network node, a data center, central training node, cloud entities, etc.

The handover procedure may be a procedure that is performed by the communication device, or by the network node, or by both the communication device and the network node. The handover procedure may be a standard handover procedure in LTE or NR which additionally comprises the steps of the methods described herein for selecting the handover parameter values for use in the handover procedure. The steps of the method described herein may replace any steps of the handover procedure in LTE or NR in which the handover parameter values are selected for a communication device (for example, the methods may replace a standard set of handover parameter values that is provided by the network). In a network, several types of handover (handover procedure) may be performed. These include intra-frequency handover; inter-frequency handover; inter-RAT (Radio Access Technology); intra-RAT handover; inter-cell layer handover; intra-cell layer handover; inter-operator handover; and intra-operator handover. Different types of handover may use different type of measurements. For example, Intra-frequency measurements may be based on the ranking of the KPIs of cells with the same carrier frequency, while inter-frequency measurements may be based on the ranking of the KPIs of other carrier frequencies. A communication device may take both Intra-frequency measurements and Inter-frequency measurements in the order of priority indicated by the network node.

As used herein, network node refers to equipment capable, configured, arranged and/or operable to communicate directly or indirectly with a communication device such as a user device and/or with other network nodes or equipment in the (radio) communication network to enable and/or provide wireless access to the user device and/or to perform other functions (e.g., administration) in the radio communication network. Examples of network nodes include, but are not limited to, access points (APs) (e.g., radio access points), base stations (BSs) (e.g., radio base stations, Node Bs, evolved Node Bs (eNBs), gNode Bs, etc.). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multistandard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node. More generally, however, network nodes may represent any suitable device (or group of devices) capable, configured, arranged, and/or operable to enable and/or provide a user device with access to the radio communication network or to provide some service to a user device that has accessed the radio communication network. The network node may be at least one of: a radio node; an access point; a base station; a centralized digital unit; a remote radio unit; a network controller; and a virtual network node. The network node may be a serving network node or an interfering network node.

As used herein, a communication device is a device on which a handover procedure can be performed. A communication device may be a user device (such as user equipment (UE)), a Machine-to-Machine (M2M) device, and/or a Machine-Type-Communication (MTC) device. For instance, the communication device may be, but is not limited to: mobile phone, smart phone, sensor device, meter, vehicle, household appliance, medical appliance, media player, camera, or any type of consumer electronic, for instance, but not limited to, television, radio, lighting arrangement, tablet computer, laptop, or PC. The communication device may be a portable, pocket-storable, hand-held, computer-comprised, or vehicle-mounted mobile device, enabled to communicate voice and/or data, via a wireless connection. Any device which is capable of wirelessly accessing the radio communication network may be considered to be a communication device.

The score may indicate the impact (for example, a reward or cost) of using the candidate handover parameter during the handover procedure of the communication device. The score may comprise a metric measuring the quality of the handover procedure. Thus, the score may indicate the likelihood that a handover procedure performed by or for the communication device using the handover parameter value is successful.

The output of the machine-learning model may comprise a Key Performance Indicator (KPI). The score may be a KPI. The Key Performance Indicators (KPIs) may be used to evaluate the performance of a handover mechanism (or a handover procedure) based on an individual communication device's experience. Thus, the KPI may indicate the impact of using the candidate handover parameter value during the handover procedure. Various counters may be used to judge the success of a handover mechanism, such as handover outgoing success rate (HOSR), handover incoming success rate (HISR), the number of attempted handovers, handover failure, and frequent handovers which may be referred as a ping-pong (PP) effect. The output of the machine-learning model may comprise a probability mass function of the score defined over the at least one candidate handover parameter value. The output of the model may comprise a probability mass function defined over the KPIs.

A plurality of candidate handover parameter values may be input to the machine-learning model. The plurality of candidate handover parameter values may comprise sets of candidate handover parameter values, and wherein candidate handover parameter values within the same set may each correspond to a different type of handover parameter. The selecting may comprise selecting a set of handover parameter values based on the output from the machine-learning model.

The at least one candidate handover parameter value may comprise candidate handover parameter values corresponding to different types of handover parameter. The at least one candidate handover parameter value may be chosen from a predefined set of possible candidate handover parameters, where the candidate handover parameter values may be chosen based on field experiments and/or simulation studies.

The machine-learning model may be a model which outputs a score indicating the impact of using the candidate handover parameter value during the handover procedure of the communication device, given communication device context information and network context information. The machine-learning model may be a supervised learning model. The machine-learning model may be a neural network model. The machine-learning model may be trained using training data and training labels. The training may be conducted using training data comprising groups of training communication device context information, training network context information, and at least one training candidate handover parameter values for a handover procedure; and training labels comprise a training score for each of the at least one training candidate handover parameter value of the training data, the training score indicating the impact of using the training handover candidate parameter value during a handover procedure. Thus, the machine-learning model may be trained to correlate communication device context information, network context information and a handover parameter value to an impact of using the handover parameter value during a handover procedure. Therefore, given communication device context information, network context information and a handover parameter value, the machine learning model may be able to predict the impact of using the candidate handover parameter value during a handover procedure involving the communication device.

The selecting of the handover parameter value may comprise sampling from a probability mass function (PMF) of the scores. The selecting may comprise selecting the handover parameter value corresponding to a maximum value of the scores. The selecting may comprise selecting the handover parameter value at random from the handover parameter value corresponding to a predetermined number of the top scores.

Thus, the handover parameter value(s) for the handover procedure involving the communication device may be selected. The at least one handover parameter may be sent to the communication device, and the at least one handover parameter value may be usable by the communication device to determine whether handover related measurements are to be reported by the communication device in the handover procedure. The at least one handover parameter value may comprises a threshold value, offset value, K, TTT, HO threshold. The at least one handover parameter value may be usable to determine whether handover related measurements are to be reported by the communication device in the handover procedure. Each of the at least one candidate handover parameter value may correspond to a handover parameter type comprising one of: time to trigger, TTT; a handover hysteresis margin, HM; a filter coefficient, K (which may be used for 3GPP Radio Layer 3 measurement filtering); an offset parameter; a hysteresis parameter, Hys; a measurement result of a cell, (which may be a serving cell Ms); a threshold parameter, Thresh; a cell individual offset, CIO; and a frequency offset. The handover parameter type may comprise at least one of: the measurement result of a neighboring cell not taking into account any offsets, Mn; the measurement object specific offset of the reference signal of a neighbour cell, Ofn; the cell specific offset of the neighbor cell, Ocn; the measurement result of a cell, Mp, the measurement object specific offset of a cell, Ofp. The cell specific offset of the SpCell, Ocp. Mn and Mp may be expressed in dBm in case of RSRP, or in dB in case of RSRQ and RS-SINR. The handover parameter values may relate to A1-A6 events, and/or B1-B2 events.

Any handover parameter values (or handover parameter types) may be used in the methods described herein. The handover parameters, or handover parameter values, may be determined according to the LTE or NR standards.

The at least one candidate handover parameter value may be chosen from a predetermined (predefined) set of possible candidate handover parameters as a step in the method. For example, before the candidate handover parameter value is input to the machine-learning model, the candidate handover parameter values may be chosen from a set of potential values. Thus, the candidate handover parameter value(s) may be preselected, or predetermined. Based on domain knowledge or simulation studies a (fixed) set of possible handover parameter values may be determined and used as the candidate handover parameter to be input to the machine-learning model. In general, there may be an acceptable range for each handover parameter. In the examples above, all possible combinations of handover parameter values in the acceptable ranges may be used in the method. However, where domain knowledge and/or simulation and/or knowledge attained from field trials is also used, it is possible to choose a subset of useful or more appropriate handover parameter values relating to certain scenarios as input. The predetermined set of handover parameter values may be changed (updated) at any time. The machine-learning model may be retrained where different handover parameter values are set.

Fig. 2b illustrates steps of a method undertaken by a communication device comprised in a system which comprises the network node. In particular, the communication device performs the step of sending communication device context information to a network node (207). The method further comprises the step of obtaining the at least one handover parameter value selected by the network node (209). The method further comprises the step of operating on the basis of the obtained at least one handover parameter (210). Thus, a handover procedure involving the communication device may be performed. The method may further comprise the communication device performing a handover procedure using the selected at least one handover parameter value.

The handover procedure may involve the communication device sending a measurement report (MR) to a network node based on a set of handover parameter values. The handover parameter values may be those determined for the communication device in the steps of the method outlined above. Therefore, the communication device may use the handover parameter values determined in the steps of the method. The communication device may receive a decision on whether handover is to occur. If handover is to occur, handover may be performed for the communication device.

The communication device context information may be information which indicates the current status of the communication device. For example, the communication device context information may comprise information relating to signal power measurements, signal timing measurements, and/or measurements indicating signal quality of signals to/from the communication device.

The communication device context information may comprise at least one of: timing advance measurement associated with the communication device; measurements of time the signal takes to reach the network node from the communication device; and measurements of time the signal takes to reach the communication device from the network node and time the signal takes to reach the network node from the communication device; reference signal received power, RSRP, measurements for downlink or uplink reference signals; and signal attenuation measurements between the communication device and the network node; the RSRP measurements comprise at least one of: channel state information reference signals, CSI-RS; channel sounding reference signals, SRS; cell-specific reference signals,

CRS; synchronization reference signals; primary and secondary synchronization reference signals, PSS, SSS, respectively; and synchronization signals and/or PBCH Blocks, SSB or SS/PBCH block; reference signal received quality, RSRQ, measurements; interference measurement for a communication link between the communication device and the network node in uplink or in downlink; measurements related to uplink or downlink signal to noise ratio, SINR; a quality of service, QoS, requirement for communication between the communication device and the network node; speed and trajectory of the communication device; location information indicating the location of the communication device.

Any number of the following may be used as the communication device context information, alone or in any combination:

A timing advance (TA) measurement associated to the user device. In LTE and 5G systems this may be derived by the network node based on uplink measurements of random-access preamble signals during the random-access procedure;

Measurements of the time a signal takes to reach the network node from a communication device, or to reach the communication device from the network node, or to reach from the network node to communication device and from communication device to network node. For example, timing advance measurements or round-trip time measurements may be used;

Signal attenuation measurements between the communication device and one or more network nodes. This may include measurements of pathloss, fading, shadowing over one or multiple communication frequencies that can be used by the communication device and the network node. Such measurements may be either wideband, i.e., one measurement for entire bandwidth of interest in a communication frequency, or narrow-band, i.e., multiple measurements are made in different parts of the bandwidth of interest in a communication frequency;

Reference Signal Received Power (RSRP) measurements for downlink or uplink reference signals. For example, channel state information reference signals (CSI-RS), channel sounding reference signals (SRS), cell-specific reference signals (CRS), synchronization reference signals, such as primary and secondary synchronization reference signals (PSS, SSS, respectively) or the Synchronization Signals and PBCH Blocks (SSB or SS/PBCH block) such as those defined by the 3GPP NR system;

Reference Signal Received Quality (RSRQ) which may be defined as (N x RSRP)/RSSI. The RSSI represents the total power of the received signal. This may include the transmitted signal, noise and interference. N is a number of resource blocks over which RSSI is measured. The unit of RSRQ is dB and the value may be negative (because RSSI value should be larger than N x RSRP). The RSRQ also varies between -19.5dB and -3dB in steps of 0.5dB;

An interference measurement, either in uplink or in downlink, for the communication link between the user device and the network node, such as wideband or narrow-band interference measurements;

Measurements related to uplink or downlink signal to noise ratio (SINR);

A Quality of service (QoS) requirement for the communication between the communication device and the network node, such as minimum or maximum rate requirements, minimum or maximum tolerable latency, minimum or maximum number of communication resources;

Speed and/or trajectory of the communication device calculated either directly from communication device measurements in the network or computed indirectly using other communication device measurements such as RSRP, location and positioning;

Location information relating to the communication device extracted either directly using dedicated positioning network nodes or calculated indirectly using other types of measurements such as TA, RSRP, path gain, angle of arrival, etc;

The network context information may be information which indicates the current status of the network. For example, the network context information may comprise information relating to network usage measurements, signal propagation measurements, signal interference measurements, and/or network usage measurements.

The network context information may comprise at least one of: traffic load in one or more radio cells of the network node serving the communication device; radio resource utilization in one or more radio cells of the network node serving the communication device; traffic load in one or more radio cells of one or more neighboring radio nodes; radio resource utilization in one or more radio cells of one or more neighboring radio nodes; type of traffic in neighboring cells or radio network nodes; distribution of traffic in neighboring cells or radio network nodes; load of neighboring cells; propagation loss measurements of radio signals from or to a serving network node; propagation loss measurements of radio signals to or from the communication device; propagation loss measurements of radio signals from or to one or more interfering network nodes; propagation loss measurements of radio signals to or from the communication device; interference measurements of radio signals from or to one or more interfering network node; interference measurements of radio signals to or from the communication device; interference measurements of radio signals from or to the serving network node and one or more interfering communication device; a network key performance indicator, KPI, associated with one or more cells of the network; a number of neighboring cells or radio network nodes that are able to interfere with the communication device; the type of neighboring cells; the type of radio network nodes; mobility settings parameters; a metric for measuring the handover performance of one or more cells.

The KPI referred to herein may comprise at least one of: successful packet delivery rate; successful packet arrival rate; throughput; spectral efficiency; latency; packet loss rate; and call drop rate.

Any number of the following may be used as the network context information, alone or in any combination:

One or more network key performance indicator (KPI) associated with one or more cells of the radio network. Relevant KPI may be throughput, spectral efficiency, latency, packet loss rate, call drop rate, etc. The KPI may be measured or estimated by one or more network nodes, in association with one or more cells (radio cells). A KPI may be represented by a single value, such as an instantaneous measurement, an average over a time window, a maximum or minimum value achieved over a time window, etc. or in statistical terms, for instance using first and second statistical moments, or a probability distribution function;

Traffic load and/or radio resource utilization in one or more radio cell of the network node serving the user device;

Traffic load and/or radio resource utilization in one or more radio cell of one or more neighboring node (i.e., an interfering network node or radio cell);

Propagation loss measurements of radio signals from/to the serving network node to/from the communication device;

Propagation loss measurements of radio signals from/to one or more interfering network node to/from the communication device;

Interference measurements of radio signals from/to one or more interfering network node to/from the communication device;

Interference measurements of radio signals from/to the serving network node and one or more interfering communication devices;

Number of neighboring cells or radio network nodes that can interfere with the communication device. In one example, a cell or radio network node may be considered to be interfering with the communication device if the received strength (power) of reference signals transmitted by such cell or radio network node exceed a certain threshold;

Type of neighboring cells or radio network nodes. For instance, one may distinguish between different generation of broadband communication systems (2g, 3G, 4G, 5G, etc.) such as UMTS, HSPA, LTE, LTE-A, 5G-NR, etc. and/ different releases of communication systems;

Type of traffic and /or distribution of traffic in neighboring cells or radio network nodes;

Mobility settings parameters, such as mobility offset setting for communication device handover;

Load of neighboring cells;

A metric for measuring the handover performance of one or more cells, such as, handover attempts for the target cell, handover success rate HOF, PP, etc. The handover performance of the target cell may be measured in a time span comparable with the communication device context information measurement. If the communication device is of high speed or served by a small cell, the time span in which the handover performance is measured may be short enough to have high correlation with current context of the communication device.

Fig. 3 illustrates a network 300 in which the methods described herein may be used. The network comprises a core network 306 (e.g. 5G, Evolved Packet Core (EPC)), a network node 302, and a first and second radio unit (first and second cells) 308a, 308b. The network may also comprise a communication device 304. The network node 302 is in communication with each of the first and second radio units 308a, 308b, and is in communication with the core network 306. In this example, the communication device 304 is in communication with the first radio unit 308a. Offline updates 310 may be provided to the network node 302. Offline updates may include a predefined set of possible candidate handover parameters for use in the methods described herein. The methods described herein may be implemented in the network node 302 (or in a network node processing unit of the network node 302). Thus, the network node 302 may perform a method to select a handover parameter value for a handover procedure involving the first communication device. In this example, the handover procedure may involve a handover of the first communication device from the first radio unit 308a to the second radio unit 308b.

In particular, the network (or system) may comprise a base station (for example, a radio base station RBS) as the network node 302, where the network node may control the radio units (cells) 308a, 308b. One eNodeB/gNB may have a baseband processing unit. Each of these baseband processing units may be connected to multiple Radio Units (either Remote Radio Heads or Radio Cards) which will handle the transmission and reception of RF signals. Each Radio unit may be connected to antenna(s) serving a particular direction, and thus forming a sector or a cell. The examples of cells may include an LTE or NR cell (or both). The network node 302 may perform the methods for selecting handover parameters for the communication device described herein (e.g run a handover algorithm embodying the methods) among other L1/L2/L3 algorithms. The connection of the network node to the core network may ensure that user and control services and traffic are transmitted in both sides (uplink and downlink).

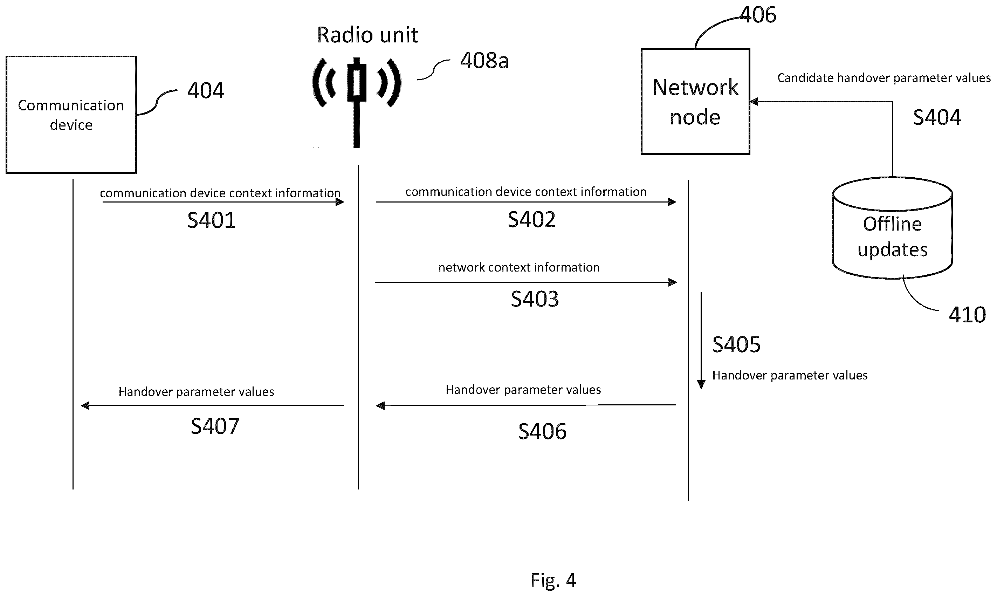

Fig. 4 illustrate a signaling diagram of a method according to an example which may be implemented in the network illustrated in Fig. 3. In particular, Fig. 4 illustrates the signaling between the communication device 404, radio unit (cell) 408a, and network node 406 as shown in Fig. 3. In this example, the communication device 404 sends communication device context information to the cell 408a (step S401), which sends on the communication device context information to the network node (step S402). Thus, the communication device 404 sends the communication device context information to the network node 406 via the cell 408a. The cell 408a also sends network context information to the network node 406 (step S403). Thus, the network node 406 obtains communication device context information and network context information. The network node 406 may also be provided with (or determines) candidate handover parameter values S404 (in this example, the network node is provided with candidate handover parameter values, however, it will be appreciated that an input of candidate handover parameter values may not be required in a situation, for example, where the machine-learning model is configured to output a score for each possible candidate handover parameter value). These may be predetermined values. The predetermined candidate handover parameter values may be provided as offline updates. The network node 406 then selects the handover parameter values (step S405) in accordance with the methods described herein. The selected handover parameters are then sent to the cell 408a (step S406), which in turn sends the handover parameter values to the communication device 404 (step S407). Thus, the network node 406 sends the handover parameter values to the communication device 404. It is noted that, in this example, the information and handover parameters are sent from the communication device to the network node via a radio unit (cell). However, it will be appreciated that the information and handover parameters may be sent from the communication device to the network node directly or by any other route through any number of devices.

It will be appreciated that the methods described herein may also apply to a system comprising a plurality of communication devices (for example a first communication device and a second communication device). In such a scenario, the methods described herein may be performed for each communication device individually. Thus, different handover parameter values may be determined for each of the first communication device and the second communication device, or each of the plurality of communication devices. The most appropriate handover parameter values may therefore be selected for handover procedures involving the respective communication devices.

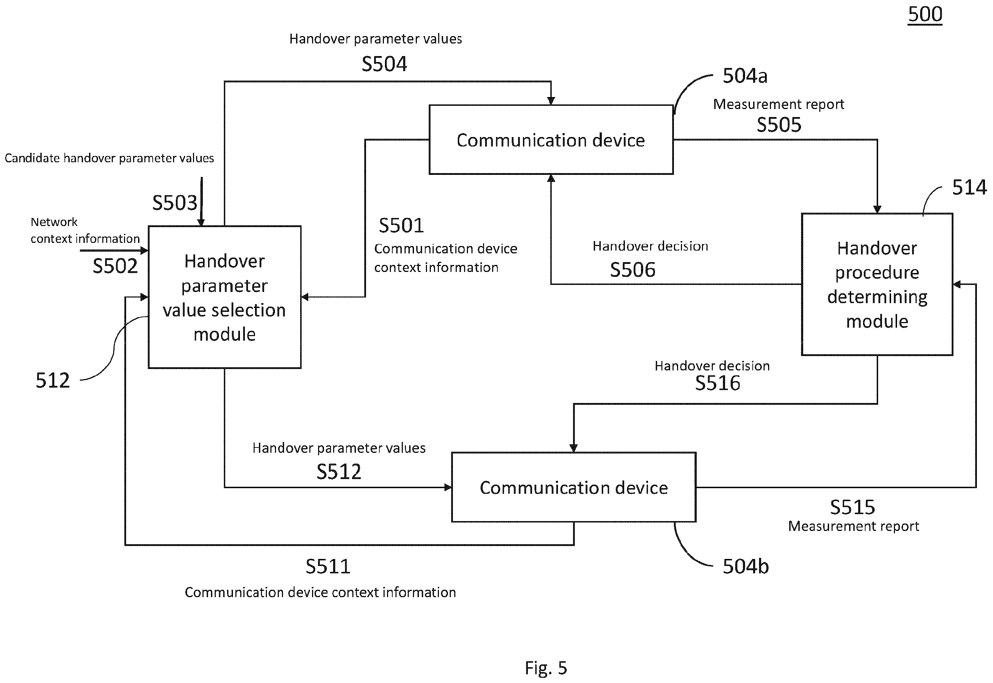

The procedure for handover parameter selection in a system comprising a plurality of communication devices (a first and second communication device in this example, although any number of communication devices could be present and use the method) is illustrated in Fig. 5. In particular, Fig. 5 illustrates a system 500 comprising a first and second communication device 504a, 504b as well as a handover parameter value selection module 512 and a handover procedure determining module 514. The handover parameter value selection module 512 and the handover procedure determining module 514 may be comprised in the same network node or may be comprised in different network nodes. In particular, the handover parameter value selection module 512 receives a set of measurements (communication device context information) from the first communication device 504a (step S501). The handover parameter value selection module 512 also receives network context information (step S502) and, in this example, candidate handover parameter values (step S503) (although it will be appreciated that it may not be necessary to input handover candidate parameter values to the handover parameter selection module where the machine-learning model is configured to output a set of scores for a predefined set of handover parameter values). The handover parameter value selection module 512 uses the received information from the first communication device 504a as well as information indicating the current status of the radio network (network context information) and the handover candidate parameters to select a set of handover parameter values for the first communication device 504a using the methods described above (e.g. using a method involving a machine-learning model). The handover parameter values are then sent to the first communication device 504a (step S504). The rest of handover procedure follows the method as described in relation to Fig. 1 (the usual handover procedures of LTE and NR may be used). In particular, steps S12 and S13 described in relation to Fig. 1 may be performed. Thus, the first communication device may periodically measure the channel quality of serving and neighboring cells (for example, RSRP, RSRQ ). The first communication device may compare the measured channel quality to handover parameter values (and/or to additional measurement values), and report the measurement results as a measurement report signal (MR) to the handover procedure determining module 514 (step S505) when handover conditions are satisfied. Then a handover decision may be triggered by the handover procedure determining module 514, and the handover decision may then be sent to the first communication device 504a (step S506).

The second communication device 504b may also interact with the handover parameter value selection module 512 and the handover procedure determining module. In particular, in this example, the handover parameter value selection module 512 receives a set of measurements (communication device context information) from the second communication device 504b (step S511). The handover parameter value selection module 512 also receives network context information (step S502) and handover candidate parameter values (step S503). (These may be the same or different network context information and/or handover candidate parameters as for the first communication device.) The handover parameter value selection module 512 uses the received information from the second communication device 504b as well as information indicating the current status of the radio network (network context information) and the handover candidate parameters to choose a set of handover parameter values for the second communication device 504b using the methods described above. The handover parameter values are then sent to the first communication device 504b (step S514). The rest of handover procedure follows the method as described in relation to Fig. 1 (the usual handover procedures of LTE and NR may be used). In particular, steps S12 and S13 described in relation to Fig. 1 may be performed. Thus, the second communication device may periodically measures the channel quality of serving and neighboring cells (for example, RSRP, RSRQ etc.). The second communication device may compare the measured channel quality to handover parameter values, and in some cases additional measurement values, and report the measurement results as a measurement report signal (MR) to the handover procedure determining module 514 (step S515) when handover conditions are satisfied. Then a handover decision may be triggered by the handover procedure determining module 514, and the handover decision may then be sent to the second communication device 304b (step S516).

Depending on when the communication device context information is received from the first and second communication device, the network context information used during each performance of the method may be the same or different. Furthermore, where the method for the first communication device is performed at the same time (in parallel) with the method for the second communication device or before a period of time has elapsed in which new network context information has been received, the network context information which is used in each of the methods for the first and second communication device may be the same. Alternatively, the same network context information may be used for each communication device until it is determined that the network context information has changed. The communication device context information, however, may be specific for each communication device.

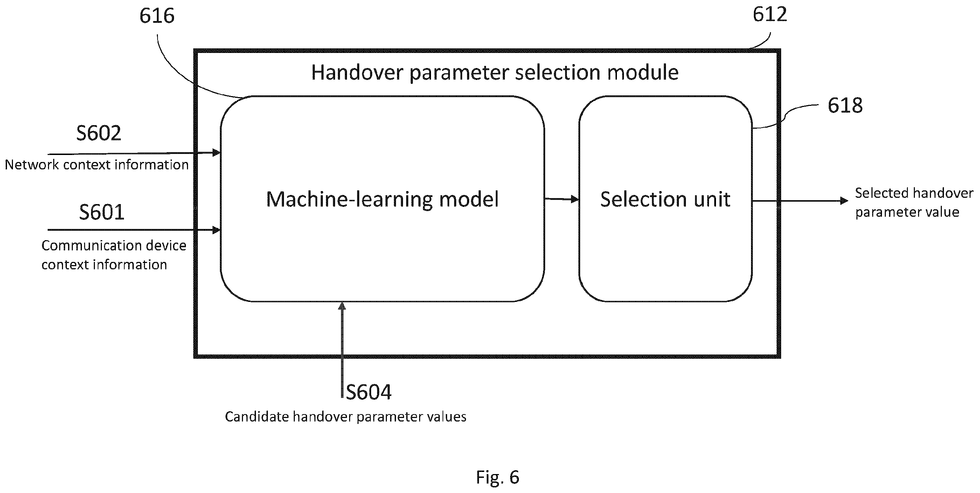

Fig. 6 illustrates a block diagram of the handover parameter value selection module 612 of Fig. 5 according to an example. The handover parameter value selection module 612 may be comprised in a network node. As is illustrated in this Fig., network context information S602 and communication device context information S601 are input to a machine-learning model 616 (handover hyperparameter selection model) comprised in the handover parameter value selection module 612, along with a list of candidate handover parameter values S604 (although it will be appreciated that it may not be necessary to input handover candidate parameter values to the handover parameter selection module where the machine-learning model is configured to output a set of scores for a predefined set of handover parameter values). The machine-learning model 616 then processes the data and outputs a score corresponding for at least one (each) of the handover parameter value candidates. A selection unit 618 of the handover parameter value selection module 612 then selects at least one handover parameter value for a handover procedure involving the communication device based on the output from the machine-learning model.

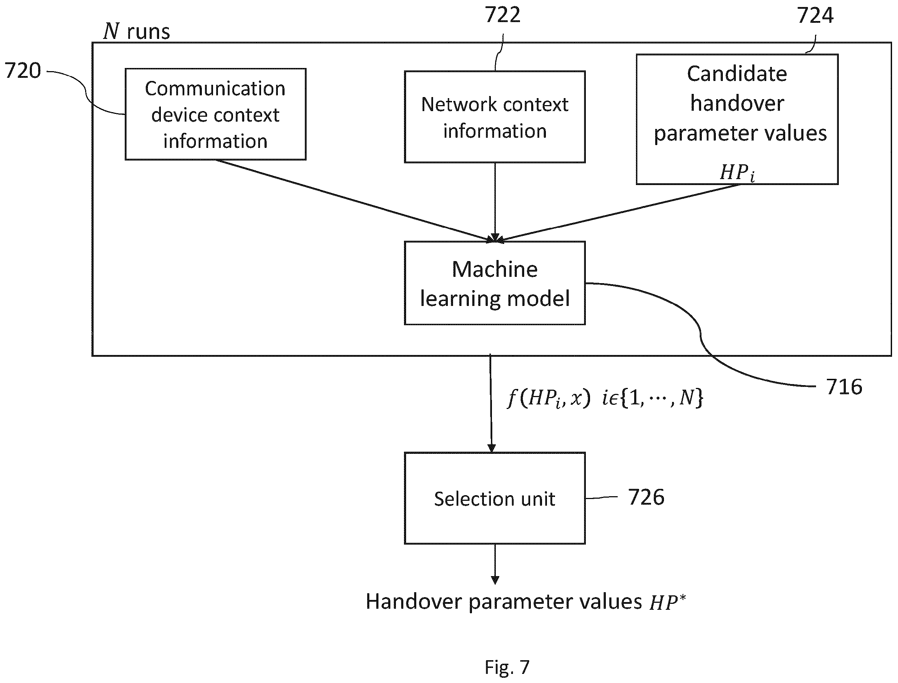

Fig. 7 is a diagram illustrating the processing of data for handover value selection according to an example. In this example, a machine-learning model 716 (such as a supervised learning model) receives communication device context information 720 and network context information 722. The machine learning model also receives a tuple of candidate handover parameter values 724 such as $HP_i$ as its input. Candidate handover parameters (HPs) can be labeled as classes such as $HP_1$, $HP_2$, $\cdots$, $HP_N$.

The candidate handover parameter values 724 for input to the machine learning model may be chosen from a predetermined or predefined set of possible candidate handover parameters. For example, a combination of handover parameters, or handover parameter values, for example, handover parameter values that are determined to be particularly important or influential on the quality of handover procedure, may be selected, for example, from one or more of the following types of handover parameter: TTT, hysteresis margin, K, CIO, etc. The candidate handover parameter values for input to the machine learning model may be chosen based on prior domain knowledge gained from either real field experiments and/or simulation studies. The prior domain knowledge may be, for example, predefined ranges to which the handover parameter values may belong, where field experiments/ simulation studies may be used to choose appropriate values from within the ranges.

Alternatively, candidate handover parameter values may not be input to the machine-learning model where the machine-learning model is configured to output a set of scores for a predefined set of handover parameter values.

In particular, a number of possible candidate handover parameter values may be down selected from a (full) set of all combinations of handover parameter values. For example, $HP_i$ may be a tuple for the handling the coverage layer. Another example can be a $HP_j$ for fast handover mechanism typically used for the capacity layer. The handover parameter values input to the model may comprise combinations of values corresponding to different handover parameter types.

A plurality of candidate handover parameter values may be input to the model, wherein the plurality of candidate handover parameter values comprise sets of candidate handover parameter values, and wherein candidate handover parameter values within the same set each correspond to a different type of handover parameter (TTT, hysteresis margin, K, CIO, etc). The handover parameter values may be processed by the machine learning model, and a score may be assigned to each of the candidate handover parameter values input to the model. The machine learning model may map communication device context information and network context information to handover parameter values.

The machine-learning model may be run N times with different as $HP_i$s where N is the total number of candidate handover parameter values chosen to be input to the machine-learning model. The output of each run of the model is a score for a (or each) handover parameter value represented by f($x$, $HP_i$) where i $\in$ $\{1, \cdots, N\}$ and $x$ is context information (the context information comprising communication device context information and network context information).

The machine-learning model outputs a score for at least one (each) candidate handover parameter. In one example, the output of the machine learning model is a score in the form of a single or multiple value representing the reward or cost (impact) of choosing one or multiple handover candidate values for a given communication device and network context information. Examples of values include real values representing the reward or cost (impact) of choosing the specific handover candidate parameter value during a handover mechanism.

Handover parameter selection is then performed, where the handover parameter for a handover procedure is selected based on the output of the machine-learning model. A selection unit 726 may then select at least one handover parameter value based on the output from the model. Thus, a set of handover parameter values which is the most likely to produce an optimal handover experience when used may be selected.

In one example, the output of the machine learning model is one or more KPI reflecting the quality of experience (QoE) of the communication device performing the handover while configured with a candidate handover parameter value. Examples of QoE KPIs include any metric measuring the quality of a handover attempt of the communication device. This may be expressed in various forms such as KPI measured after the handover, the difference between a similar KPI before and after the handover, a KPI which a QoS (quality of service) metric, or KPI reported by RAN in a time periodicity suitable for handover mechanism that indicates whether the communication device is satisfied with currently allocated link level services or quantifies the level of satisfaction. These metrics may be particularly beneficial to use as they indicate user satisfaction. Alternatively or additionally, average SINR or link adaptation level KPIs may be used.

In some examples the output of the model may represent a probability mass function (PMF) defined over the set of candidate handover parameter values. As an example of PMF, the following softmax function may be defined on individual score values:

$$p(i) = \frac{e^{\beta f_i}}{\sum_{j=1}^{N} e^{\beta f_j}}$$

where P(i) denotes the PMF value specific to score index i. The score values are denoted as $f_i$ with i $\in$ $\{1, \cdots, N\}$ where index i represents the candidate handover parameter value $HP_i$ and N denotes the total number of handover parameter values that can be configured for the given network and user context information. Moreover, $\beta$ is a constant parameter controlling the behavior of the PMF function. For instance, larger values of $\beta$ will move the value of function closer to the largest score value $f_{max}$ = are gmax ($f_i$).

In one example, the model may be a neural network (NN) with an input layer, a number of hidden layers and an output layer. The NN may receive the communication device and network context information as well as at least one candidate handover parameter value $HP_i$ as inputs. The output of the NN may then be a single value (a score) representing f($x$, $HP_i$) where x represents the communication device context information and network context information.

In one example, the NN receives the communication device and network context information as inputs. The NN in such an example may be configured to use the network context information and communication device context information to generate scores for all potential handover parameter values which are predefined in the NN. For example, the output of such a NN may be a list of all potential handover parameter values with a score for each handover parameter value. The output may be in the form of multiple values $f_i$(x) for all i $\in$ $\{1, \cdots, N\}$ in which index i represents the candidate handover parameter value $HP_i$.

In one example the inputs to the model are provided one by one and the model is executed sequentially for different input values. In another example the inputs to the model are provided as a group (batch) of samples and the model is executed in parallel (for different input values), where the results may be generated at the same time.

A recommender method system, such as collaborative filtering, may be used as the machine-learning model. Such a system may attempt to find similar communication device and network context information. Handover parameter values with high scores for those similar communication device context information and network context information may then be selected. To develop such a model, similar experiences may be determined using gradual learning processes from different communication devices to identify preferred setting and handling. Computational recommender systems may allow communication devices to share information on network context information, communication device context information and handover parameter values used in a handover procedure. Such information may be processed using standard methods of collaborative filtering such as k-nearest neighbor, matrix factorization or deep learning in order to correlate context information with the success of handover parameter values. Any relevant algorithm (such as K-nearest neighbor, matrix factorization) may be used to find the similarity between inputs (for example, the UE and network context info).

In another example, the machine-learning model is of a tabular format in which individual rows represent a combination of communication device context information and network context information x (per individual communication device) and the columns of the table are different handover parameter candidates ($HP_i$). The score of each x and $HP_i$ may be a user satisfaction KPIs value. The model may find a candidate handover parameter value $HP_i$ with similar (or the same) communication device context information and/or network context information.

The machine-learning model may be trained using training data and training labels. The training data may comprise groups of training communication device context information, training network context information, and at least one training candidate handover parameter values for a handover procedure. The training labels may comprise a training score for each of the at least one training candidate handover parameter value of the training data, the training score indicating the impact of using the training handover candidate parameter value during a handover procedure. The training data and labels may be determined by performing simulations and/or field analysis to find appropriate training labels (output of model) for given training data (input of model). For example, for particular network context information and communication device context information using particular handover parameter values, a score may be attributed to the handover parameter values. The score may indicate the impact of using the candidate handover parameter values during a handover procedure. For the training labels, the impact may be determined by measuring the quality of the handover procedure.

Examples of simulation scenarios of handover procedures in different handover situations used for training may comprise highway (high mobility, coverage, low PP, low HOF/pedestrian (low mobility, capacity)), intra vs inter handover, and/or load balancing.

The machine learning model may be trained using this training data and training labels so that it is able to output a score indicating the impact of using candidate handover parameter values based on input communication device context information, network context information and candidate handover parameter values.

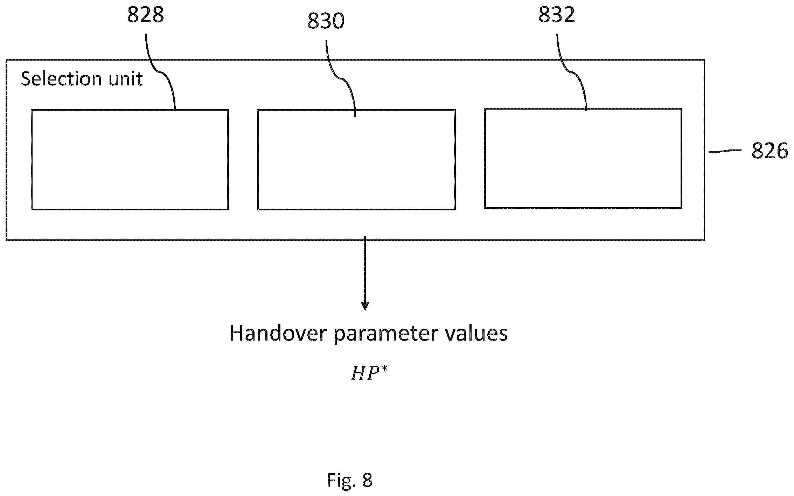

Fig. 8 illustrates a selection unit 826. In this example, one of three alternative methods may be used for selecting of the handover parameter values from the output of the machine-learning model. In one example, a complete set of scores (impact or rewards or costs or ranks) are used to create a top-k number of ranked handover parameter values (ranked by score). Then handover parameter values may be selected based on a rule such as uniform at random, select the top value, etc.

In a first example, the selecting comprises sampling from a probability mass function (PMF) of the scores 828. The probability mass function may have been constructed from the output of the machine-learning model, or the output of the machine-learning model may be a probability mass function. In a second example, the selecting comprises selecting the handover parameter value corresponding to a maximum value of the scores 830. The output of the model may be chosen based on a metric that ranks model outputs associated to different handover parameter values. In a third example, the selecting comprises selecting the handover parameter value at random from the handover parameter value corresponding to a predetermined number of the top scores 832. The PMF may be defined over a set of KPIs generated by the machine-learning model.

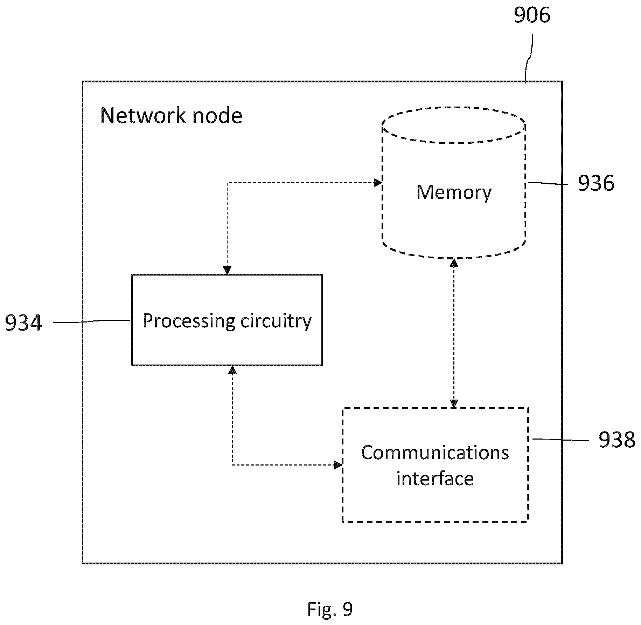

As illustrated in **Fig. 9,** in an example the network node 906 comprises network node processing circuitry (or logic) 934. The processing circuitry 934 controls the operation of the network node 906 and can implement the methods described herein in respect of the network node 906. The processing circuitry 934 can be configured or programmed to control the network node 906 in the manner described herein. The processing circuitry 934 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the network node 906. In some examples, the processing circuitry 934 can be configured to run software to perform the method described herein in respect of the network node 906. The software may be containerised according to some examples. Thus, in some examples, the processing circuitry 934 may be configured to run a container to perform the method described herein in respect of the network node 906.

Briefly, the processing circuitry 934 of the network node 906 is configured select a handover parameter value for a handover procedure involving a communication device according to the methods described above.

As illustrated in Fig. 9, in some examples, the network node 906 may optionally comprise a network node memory 936. The memory 936 of the network node 906 can comprise a volatile memory or a non-volatile memory. In some examples, the memory 936 of the network node 906 may comprise a non-transitory media. Examples of the memory 936 of the network node 906 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 934 of the network node 906 can be connected to the memory 936 of the network node 906. In some examples, the memory 936 of the network node 906 may be for storing program code or instructions which, when executed by the processing circuitry 934 of the network node 906, cause the network node 906 to operate in the manner described herein in respect of the network node 906. For example, in some examples, the memory 936 of the network node 906 may be configured to store program code or instructions that can be executed by the processing circuitry 934 of the network node 906 to cause the network node 906 to operate in accordance with the method described herein in respect of the network node 906. Alternatively or in addition, the memory 936 of the network node 906 can be configured to store any information, data, messages, requests, responses, indications, notifications, signals, or similar, that are described herein. The processing circuitry 934 of the network node 906 may be configured to control the memory 936 of the network node 906 to store information, data, messages, requests, responses, indications, notifications, signals, or similar, that are described herein.

In some examples, as illustrated in Fig. 9, the network node 906 may optionally comprise a transport node communications interface 938. The communications interface 938 of the network node 906 can be connected to the processing circuitry 934 of the network node 906 and/or the memory 936 of network node 906. The communications interface 938 of the network node 906 may be operable to allow the processing circuitry 934 of the network node 906 to communicate with the memory 936 of the network node 906 and/or vice versa. Similarly, the communications interface 938 of the network node 906 may be operable to allow the processing circuitry 934 of the network node 906 to communicate with the communication device or any intermediate device. The communications interface 938 of the network node 906 can be configured to transmit and/or receive information, data, messages, requests, responses, indications, notifications, signals, or similar, that are described herein. In some examples, the processing circuitry 934 of the network node 906 may be configured to control the communications interface 938 of the network node 906 to transmit and/or receive information, data, messages, requests, responses, indications, notifications, signals, or similar, that are described herein. The communications interface 938 of the network node may be configured to communicate with the communication device.

Although the network node 906 is illustrated in Fig. 9 as comprising a single memory 936, it will be appreciated that the network node 906 may comprise at least one memory (i.e. a single memory or a plurality of memories) 34 that operate in the manner described herein. Similarly, although the network node 906 is illustrated in Fig. 9 as comprising a single communications interface 938, it will be appreciated that the network node 906 may comprise at least one communications interface (i.e. a single communications interface or a plurality of communications interface) 36 that operate in the manner described herein. It will also be appreciated that Fig. 5 only shows the components required to illustrate an example of the network node 906 and, in practical implementations, the network node 906 may comprise additional or alternative components to those shown.

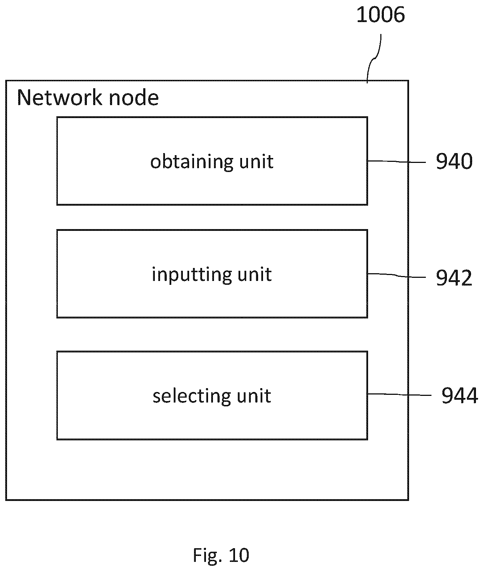

Fig. 10 illustrates a network node 1006 according to an example, the network node 1006 comprising an obtaining unit 940 configured to obtain communication device context information related to a current status of a communication device, and network context information related to a current status of the communication network, an inputting unit 942 configured to input the communication device context information and the network context information (and, in some cases, at least one candidate handover parameter value) to a machine-learning model, wherein the machine-learning model outputs a score for at least one candidate handover parameter value based on the communication device context information and the network context information, and a selecting unit 944 configured to select at least one handover parameter value for a handover procedure involving the communication device based on the output from the machine-learning model, wherein the selected at least one handover parameter value is specific to the communication device.

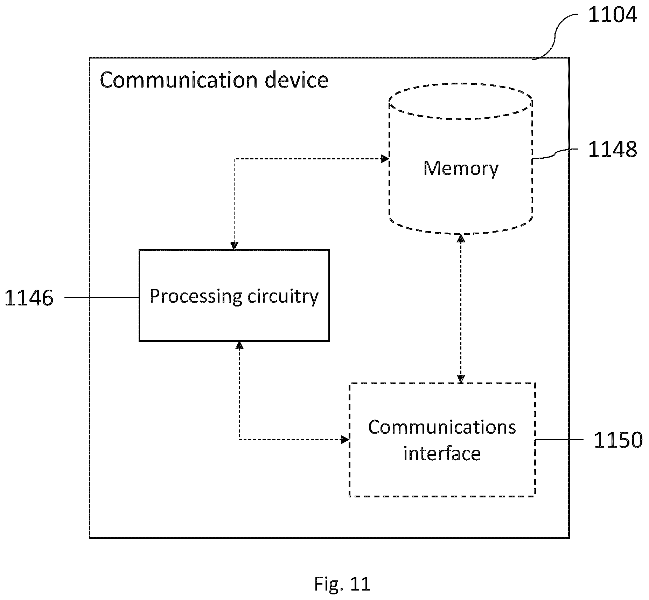

As illustrated in **Fig. 11,** in aspects of examples the communication device 1104 comprises communication device processing circuitry (or logic) 1146. The processing circuitry 1146 controls the operation of the communication device 1104 and can implement the method described herein in respect of the communication device 1104. The processing circuitry 1146 can be configured or programmed to control the communication device 1104 in the manner described herein. The processing circuitry 1146 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the communication device 1104. In some examples, the processing circuitry 1146 can be configured to run software to perform the method described herein in respect of the communication device 1104. The software may be containerised according to some examples. Thus, in some examples, the processing circuitry 1146 may be configured to run a container to perform the method described herein in respect of the communication device 1104.

Briefly, the processing circuitry 1146 of the communication device 1104 is configured to operate on the basis of the obtained at least one handover parameter from the network node.

As illustrated in Fig. 11, in some examples, the communication device 1104 may optionally comprise a communication device memory 1148. The memory 1148 of the communication device 1104 can comprise a volatile memory or a non-volatile memory. In some examples, the memory 1148 of the communication device 1104 may comprise a non-transitory media. Examples of the memory 1148 of the communication device 1104 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 1146 of the communication device 1104 can be connected to the memory 1148 of the communication device 1104. In some examples, the memory 1148 of the communication device 1104 may be for storing program code or instructions which, when executed by the processing circuitry 1146 of the communication device 1104, cause the communication device 1104 to operate in the manner described herein in respect of the communication device 1104. For example, in some examples, the memory 1148 of the communication device 1104 may be configured to store program code or instructions that can be executed by the processing circuitry 1146 of the communication device 1104 to cause the communication device 1104 to operate in accordance with the method described herein in respect of the communication device 1104. Alternatively or in addition, the memory 1148 of the communication device 1104 can be configured to store any information, data, messages, requests, responses, indications, notifications, signals, or similar, that are described herein. The processing circuitry 1146 of the communication device 1104 may be configured to control the memory 1148 of the communication device 1104 to store information, data, messages, requests, responses, indications, notifications, signals, or similar, that are described herein.

In some examples, as illustrated in Fig. 11, the communication device 1104 may optionally comprise communication device communications interface 1150. The communications interface 1150 of the communication device 1104 can be connected to the processing circuitry 1146 of the communication device 1104 and/or the memory 1148 of communication device 1104. The communications interface 1150 of the communication device 1104 may be operable to allow the processing circuitry 1146 of the communication device 1104 to communicate with the memory 1148 of the communication device 1104 and/or vice versa. Similarly, the communications interface 1150 of the communication device 1104 may be operable to allow the processing circuitry 1146 of the communication device 1104 to communicate with the second RAN node and/or the transport nodes. The communications interface 1150 of the communication device 1104 can be configured to transmit and/or receive information, data, messages, requests, responses, indications, notifications, signals, or similar, that are described herein. In some examples, the processing circuitry 1146 of the communication device 1104 may be configured to control the communications interface 1150 of the communication device 1104 to transmit and/or receive information, data, messages, requests, responses, indications, notifications, signals, or similar, that are described herein. The communications interface 1150 of the communication device may be configured to communicate with the network node.

Although the communication device 1104 is illustrated in Fig. 11 as comprising a single memory 1148, it will be appreciated that the communication device 1104 may comprise at least one memory (i.e. a single memory or a plurality of memories) that operate in the manner described herein. Similarly, although the communication device 1104 is illustrated in Fig. 11 as comprising a single communications interface 1150, it will be appreciated that the communication device 1104 may comprise at least one communications interface (i.e. a single communications interface or a plurality of communications interface) 36 that operate in the manner described herein. It will also be appreciated that Fig. 11 only shows the components required to illustrate an example of the communication device 1104 and, in practical implementations, the communication device 1104 may comprise additional or alternative components to those shown.

The network node 906 of Fig. 9 and the communication device 1104 of Fig. 11 may be comprised in a mobile communications system, or a network such as a communication network, RAN network.

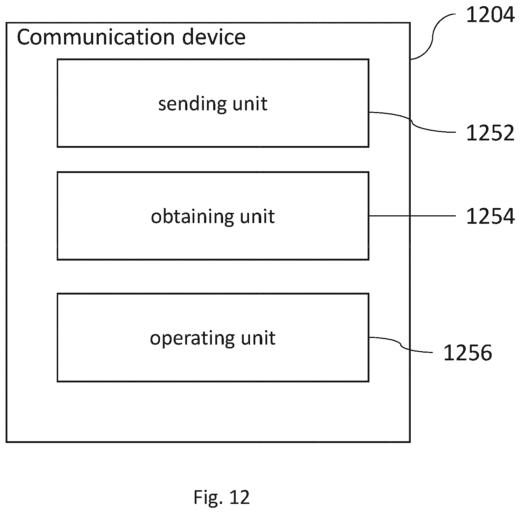

Fig. 12 illustrates a communication device 1204 according to an example, the communication device 1204 comprising a sending unit 1252 configured to sending communication device context information to a network node, an obtaining unit 1254 configured to obtain the at least one handover parameter value selected by the network node and an operating unit 1256 configured to operate on the basis of the obtained at least one handover parameter.

In general, the various exemplary examples may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary examples of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary examples of the disclosure may be practiced in various components such as integrated circuit chips and modules. It should thus be appreciated that the exemplary examples of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary examples of this disclosure.

It should be appreciated that at least some aspects of the exemplary examples of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various examples. In addition, the function may be embodied in whole or in part in firmware or hardware equivalents such as integrated circuits, field programmable gate arrays (FPGA), and the like.

References in the present disclosure to "one example", "an example" and so on, indicate that the example described may include a particular feature, structure, or characteristic, but it is not necessary that every example includes the particular feature, structure, or characteristic. Moreover, such phrases are not necessarily referring to the same example. Further, when a particular feature, structure, or characteristic is described in connection with an example, it is submitted that it is within the knowledge of one skilled in the art to implement such feature, structure, or characteristic in connection with other examples whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular examples only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary examples of this disclosure may become apparent to those skilled in the relevant arts in view of the foregoing description, when read in conjunction with the accompanying drawings. However, any and all modifications will still fall within the scope of the non-Limiting and exemplary examples of this disclosure.

**Claims**

1. A method implemented in a network node (302) of a communication network (300), the method comprising:

   obtaining communication device context information related to a current status of a communication device (304), and network context information related to a current status of the communication network (300);
   inputting the communication device context information and the network context information to a machine-learning model (616), wherein the machine-learning model outputs a score for at least one candidate handover parameter value based on the communication device context information and the network context information; and
   selecting at least one handover parameter value for a handover procedure involving the communication device (304) based on the output from the machine-learning model, wherein the selected at least one handover parameter value is specific to the communication device (304).

2. The method as claimed in claim 1, wherein the method further comprises inputting at least one candidate handover parameter value to the machine-learning model.

3. The method as claimed in claim 1 or 2, wherein the score indicates an impact of using the at least one candidate handover parameter value during the handover procedure,

wherein the impact of using the at least one candidate handover parameter value during the handover procedure comprises a metric measuring the quality of the handover procedure.

4. The method as claimed in any preceding claim, wherein output from the machine-learning model comprises a key performance indicator, KPI, wherein the KPI is at least one of: successful packet delivery rate; successful packet arrival rate; throughput; spectral efficiency; latency; packet loss rate; and call drop rate.

5. The method as claimed in any preceding claim, wherein

   a plurality of candidate handover parameter values are input to the machine-learning model (616), wherein the plurality of candidate handover parameter values comprise sets of candidate handover parameter values, and wherein candidate handover parameter values within the same set each correspond to a different type of handover parameter; and wherein
   the selecting comprises selecting a set of handover parameter values based on the output from the machine-learning model (616).

6. The method as claimed in any preceding claim, wherein the at least one candidate handover parameter value comprises candidate handover parameter values corresponding to different types of handover parameter.

7. The method as claimed in any of claims 2 to 6, wherein the at least one candidate handover parameter value is chosen for input to the machine-learning model (616) from a predefined set of possible candidate handover parameters.

8. The method is claimed in claim 7, wherein the at least one candidate handover parameter value is chosen from the predefined set of possible candidate handover parameters based on one of: field experiments; and simulation studies.

9. The method as claimed in any preceding claim, wherein the at least one handover parameter value comprises a threshold value or offset value, and wherein the at least one handover parameter value is usable to determine whether handover related measurements are to be reported by the communication device (304) in the handover procedure.

10. The method as claimed in any preceding claim, wherein the communication device context information comprises signal timing measurements.

11. The method as claimed in any preceding claim, wherein the communication device context information comprises signal power measurements.

12. The method as claimed in any preceding claim, wherein the communication device context information comprises signal quality measurements.

13. The method as claimed in any preceding claim, wherein the communication device context information comprises at least one of: a quality of service, QoS, requirement for communication between the communication device (304) and the network node (302); speed and trajectory of the communication device (304); and location information indicating the location of the communication device (304).

14. The method as claimed in any preceding claim, wherein the network context information comprises network usage measurements or signal propagation measurements or signal interference measurements.

15. The method as claimed in any preceding claim, the method further comprising sending the selected at least one handover parameter value to the communication device (304).

16. The method as claimed in any preceding claim, wherein the steps of the method are repeated for each of a plurality of communication devices in the communication network (300).

17. A network node (302) for use in a communication network (300), wherein
the network node (302) comprises processing circuitry and a memory containing instructions executable by the processing circuitry, whereby the network node is operable to:

   obtain communication device context information related to a current status of a communication device (304), and network context information related to a current status of the communication network (300);
   input the communication device context information and the network context information to a machine-learning model (616), wherein the machine-learning model (616) outputs a score for at least one candidate handover parameter value based on the communication device context information and the network context information; and
   select at least one handover parameter value for a handover procedure involving the communication device (304) based on the output from the machine-learning model (616), wherein the selected at least one handover parameter value is specific to the communication device (304).

## Patentansprüche

1. Verfahren, das in einem Netzwerkknoten (302) eines Kommunikationsnetzwerks (300) umgesetzt ist, wobei das Verfahren umfasst:

   Erhalten von Kontextinformationen für Kommunikationsgeräte, die sich auf einen aktuellen Status eines Kommunikationsgeräts (304) beziehen, und von Netzwerkkontextinformationen, die sich auf einen aktuellen Status des Kommunikationsnetzwerks (300) beziehen;
   Eingeben der Kontextinformationen für Kommunikationsgeräte und der Netzwerkkontextinformationen in ein Modell (616) für maschinelles Lernen, wobei das Modell für maschinelles Lernen eine Scorewert für mindestens einen Kandidaten-Handover-Parameterwert basierend auf den Kontextinformationen für Kommunikationsgeräte und den Netzwerkkontextinformationen ausgibt; und
   Auswählen mindestens eines Handover-Parameterwerts für eine Handover-Prozedur, die das Kommunikationsgerät (304) beinhaltet, basierend auf der Ausgabe des Modells für maschinelles Lernen, wobei der ausgewählte mindestens eine Handover-Parameterwert für das Kommunikationsgerät (304) spezifisch ist.

2. Verfahren nach Anspruch 1, wobei das Verfahren ferner das Eingeben von mindestens einem Kandidaten-Handover-Parameterwert in das Modell für maschinelles Lernen umfasst.

3. Verfahren nach Anspruch 1 oder 2, wobei der Scorewert einen Einfluss des Verwendens des mindestens einen Kandidaten-Handover-Parameterwerts während der Handover-Prozedur anzeigt,
   wobei der Einfluss des Verwendens des mindestens einen Kandidaten-Handover-Parameterwerts während der Handover-Prozedur eine Metrik umfasst, die die Qualität der Handover-Prozedur misst.

4. Verfahren nach einem vorangehenden Anspruch, wobei eine Ausgabe des Modells für maschinelles Lernen eine wichtige Leistungskennzahl, KPI, umfasst,
   wobei die KPI zumindest eines ist aus: Rate der erfolgreichen Paketzustellung; Rate des erfolgreichen Paketeingangs; Durchsatz: spektraler Effizienz; Latenz; Paketverlustrate und Anrufabbruchrate.

5. Verfahren nach einem vorhergehenden Anspruch, wobei:

   in das Modell (616) für maschinelles Lernen eine Mehrzahl von Kandidaten-Handover-Parameterwerten eingegeben wird, wobei die Mehrzahl von Kandidaten-Handover-Parameterwerten Sätze von Kandidaten-Handover-Parameterwerten umfasst, und wobei Kandidaten-Handover-Parameterwerte innerhalb desselben Satzes jeweils einem anderen Typ von Handover-Parameter entsprechen; und wobei
   das Auswählen das Auswählen eines Satzes von Handover-Parameterwerten basierend auf der Ausgabe des Modells (616) für maschinelles Lernen umfasst.

6. Verfahren nach einem vorhergehenden Anspruch, wobei der mindestens eine Kandidaten-Handover-Parameterwert Kandidaten-Handover-Parameterwerte umfasst, die verschiedenen Typen von Handover-Parametern entsprechen.

7. Verfahren nach einem der Ansprüche 2 bis 6, wobei der mindestens eine Kandidaten-Handover-Parameterwert für die Eingabe in das Modell (616) für maschinelles Lernen aus einem vordefinierten Satz möglicher Kandidaten-Handover-Parameter ausgewählt wird.

8. Verfahren nach Anspruch 7, wobei der mindestens eine Kandidaten-Handover-Parameterwert aus dem vordefinierten Satz möglicher Kandidaten-Handover-Parameter ausgewählt wird, basierend auf einem aus: Feldversuchen; und Simulationsstudien.

9. Verfahren nach einem vorangehenden Anspruch, wobei der mindestens eine Handover-Parameterwert einen Schwellenwert oder einen Offse-Wert umfasst und wobei der mindestens eine Handover-Parameterwert verwendbar ist, um festzustellen, ob handoverbezogene Messwerte von dem Kommunikationsgerät (304) in der Handover-Prozedur zu melden sind.

10. Verfahren nach einem vorangehenden Anspruch, wobei die Kontextinformationen für Kommunikationsgeräte Signalzeitmessungen umfassen.

11. Verfahren nach einem vorangehenden Anspruch, wobei die Kontextinformationen für Kommunikationsgeräte Signalleistungsmessungen umfassen.

12. Verfahren nach einem vorangehenden Anspruch, wobei die Kontextinformationen für Kommunikationsgeräte Signalqualitätsmessungen umfassen.

13. Verfahren nach einem vorangehenden Anspruch, wobei die Kontextinformationen zumindest eines umfassen aus: einer Anforderung der Dienstgüte, QoS, an die Kommunikation zwischen dem Kommunikationsgerät (304) und dem Netzwerkknoten (302); Geschwindigkeit und Bewegungsbahn des Kommunikationsgeräts (304); und Standortinformationen, die den Standort des Kommunikationsgeräts (304) angeben.

14. Verfahren nach einem vorangehenden Anspruch, wobei die Netzwerkkontextinformationen Netznutzungsmessungen oder Signalausbreitungsmessungen oder Signalinterferenzmessungen umfassen.

15. Verfahren nach einem vorangehenden Anspruch, wobei das Verfahren ferner das Senden des ausgewählten mindestens einen Handover-Parameterwerts an das Kommunikationsgerät (304) umfasst.

16. Verfahren nach einem vorangehenden Anspruch, wobei die Schritte des Verfahrens für jedes einer Mehrzahl von Kommunikationsgeräten im Kommunikationsnetzwerk (300) wiederholt werden.

17. Netzwerkknoten (302) zur Verwendung in einem Kommunikationsnetzwerk (300), wobei
der Netzwerkknoten (302) eine Verarbeitungsschaltung und einen Speicher mit Anweisungen umfasst, die von der Verarbeitungsschaltung ausführbar sind, wobei der Netzwerkknoten dazu betreibbar ist:

Erhalten von Kontextinformationen für Kommunikationsgeräte, die sich auf einen aktuellen Status eines Kommunikationsgeräts (304) beziehen, und von Netzwerkkontextinformationen, die sich auf einen aktuellen Status des Kommunikationsnetzwerks (300) beziehen;
Eingeben der Kontextinformationen für Kommunikationsgeräte und der Netzwerkkontextinformationen in ein Modell (616) für maschinelles Lernen, wobei das Modell (616) für maschinelles Lernen eine Scorewert für mindestens einen Kandidaten-Handover-Parameterwert basierend auf den Kontextinformationen für Kommunikationsgeräte und den Netzwerkkontextinformationen ausgibt; und
Auswählen mindestens eines Handover-Parameterwerts für eine Handover-Prozedur, die das Kommunikationsgerät (304) beinhaltet, basierend auf der Ausgabe des Modells (616) für maschinelles Lernen, wobei der ausgewählte mindestens eine Handover-Parameterwert für das Kommunikationsgerät (304) spezifisch ist.

**Revendications**

1. Procédé mis en œuvre dans un nœud de réseau (302) d'un réseau de communication (300), le procédé comprenant :

l'obtention d'informations de contexte de dispositif de communication liées à un état actuel d'un dispositif de communication (304), et d'informations de contexte de réseau liées à un état actuel du réseau de communication (300) ;
l'entrée des informations de contexte de dispositif de communication et des informations de contexte de réseau dans un modèle d'apprentissage automatique (616), dans lequel le modèle d'apprentissage automatique sort un score pour au moins une valeur de paramètre de transfert candidat sur la base des informations de contexte de dispositif de communication et des informations de contexte de réseau ; et
la sélection d'au moins une valeur de paramètre de transfert pour une procédure de transfert impliquant le dispositif de communication (304) sur la base de la sortie du modèle d'apprentissage automatique, dans lequel l'au moins une valeur de paramètre de transfert sélectionnée est spécifique au dispositif de communication (304).

2. Procédé selon la revendication 1, dans lequel le procédé comprend en outre l'entrée d'au moins une valeur de paramètre de transfert candidat dans le modèle d'apprentissage automatique.

3. Procédé selon la revendication 1 ou 2, dans lequel le score indique un impact de l'utilisation de l'au moins une valeur de paramètre de transfert candidat pendant la procédure de transfert,
dans lequel l'impact de l'utilisation de l'au moins une valeur de paramètre de transfert candidat pendant la procédure de transfert comprend une métrique mesurant la qualité de la procédure de transfert.

4. Procédé selon l'une quelconque des revendications précédentes, dans lequel la sortie du modèle d'apprentissage automatique comprend un indicateur de performance clé, KPI,
dans lequel le KPI est au moins l'un parmi : le taux de livraison de paquets réussis ; le taux d'arrivée de paquets réussis ; le débit ; l'efficacité spectrale ; la latence ; le taux de perte de paquets ; et le taux d'abandon d'appel.

5. Procédé selon l'une quelconque des revendications précédentes, dans lequel

une pluralité de valeurs de paramètre de transfert candidat sont entrées dans le modèle d'apprentissage automatique (616), dans lequel la pluralité de valeurs de paramètre de transfert candidat comprennent des ensembles de valeurs de paramètre de transfert candidat, et dans lequel les valeurs de paramètre de transfert candidat dans le même ensemble correspondent chacune à un type différent de paramètre de transfert ; et dans lequel la sélection comprend la sélection d'un ensemble de valeurs de paramètres de transfert sur la base de la sortie du modèle d'apprentissage automatique (616).

6. Procédé selon l'une quelconque des revendications précédentes, dans lequel l'au moins une valeur de paramètre de transfert candidat comprend des valeurs de paramètre de transfert candidat correspondant à différents types de paramètre de transfert.

7. Procédé selon l'une quelconque des revendications 2 à 6, dans lequel l'au moins une valeur de paramètre de transfert candidat est choisie pour être entrée dans le modèle d'apprentissage automatique (616) à partir d'un ensemble prédéfini de paramètres de transfert candidats possibles.

8. Procédé selon la revendication 7, dans lequel l'au moins une valeur de paramètre de transfert candidat est choisie parmi l'ensemble prédéfini de paramètres de transfert candidats possibles sur la base de l'une des suivantes : des expériences sur le terrain ; et des études de simulation.

9. Procédé selon l'une quelconque des revendications précédentes, dans lequel l'au moins une valeur de paramètre de transfert comprend une valeur de seuil ou une valeur de décalage, et dans lequel l'au moins une valeur de paramètre de transfert peut être utilisée pour déterminer si des mesures liées au transfert doivent être signalées par le dispositif de communication (304) dans la procédure de transfert.

10. Procédé selon l'une quelconque des revendications précédentes, dans lequel les informations de contexte de dispositif de communication comprennent des mesures de synchronisation de signal.

11. Procédé selon l'une quelconque des revendications précédentes, dans lequel les informations de contexte de dispositif de communication comprennent des mesures de puissance de signal.

12. Procédé selon l'une quelconque des revendications précédentes, dans lequel les informations de contexte de dispositif de communication comprennent des mesures de qualité de signal.

13. Procédé selon l'une quelconque des revendications précédentes, dans lequel les informations de contexte de dispositif de communication comprennent au moins l'une des suivantes : une exigence de qualité de service, QoS, pour la communication entre le dispositif de communication (304) et le nœud de réseau (302) ; la vitesse et la trajectoire du dispositif de communication (304) ; et des informations de localisation indiquant la localisation du dispositif de communication (304).

14. Procédé selon l'une quelconque des revendications précédentes, dans lequel les informations de contexte de réseau comprennent des mesures d'utilisation de réseau ou des mesures de propagation de signal ou des mesures d'interférence de signal.

15. Procédé selon l'une quelconque des revendications précédentes, le procédé comprenant en outre l'envoi de l'au moins une valeur de paramètre de transfert sélectionnée au dispositif de communication (304).

16. Procédé selon l'une quelconque des revendications précédentes, dans lequel les étapes du procédé sont répétées pour chacun d'une pluralité de dispositifs de communication dans le réseau de communication (300).

17. Nœud de réseau (302) destiné à être utilisé dans un réseau de communication (300), dans lequel le nœud de réseau (302) comprend un circuit de traitement et une mémoire contenant des instructions exécutables par le circuit de traitement, le nœud de réseau fonctionnant pour :

obtenir des informations de contexte de dispositif de communication liées à un état actuel d'un dispositif de communication (304) et des informations de contexte de réseau liées à un état actuel du réseau de communication (300) ; entrer les informations de contexte de dispositif de communication et le information de contexte de réseau dans un modèle d'apprentissage automatique (616), dans lequel le modèle d'apprentissage automatique (616) génère un score pour au moins une valeur de paramètre de transfert candidat sur la base des informations de contexte de dispositif de communication et des informations de contexte de réseau ; et sélectionner au moins une valeur de paramètre de transfert pour une procédure de transfert impliquant le dispositif de communication (304) sur la base de la sortie du modèle d'apprentissage automatique (616), dans lequel l'au moins une valeur de paramètre de transfert sélectionnée est spécifique au dispositif de communication (304).

EP 4 214 954 B1

102

100

Network node

S13

S10

S12

Communication
device

104

Fig. 1

obtaining communication device context information related to a current status of a communication device, and network context information related to a current status of the communication network — 201

inputting the communication device context information and the network context information to a machine-learning model, wherein the machine-learning model outputs a score for at least one candidate handover parameter value based on the communication device context information and the network context information — 203

selecting at least one handover parameter value for a handover procedure involving the communication device based on the output from the machine-learning model, wherein the selected at least one handover parameter value is specific to the communication device — 205

Fig. 2a

EP 4 214 954 B1

sending communication device context information to a network node — 207

obtaining the at least one handover parameter value selected by the network node — 209

operating on the basis of the obtained at least one handover parameter — 210

Fig. 2b

EP 4 214 954 B1

Fig. 3

Fig. 4

Fig. 5

Fig. 6

EP 4 214 954 B1

Fig. 7

Handover parameter values

$HP^*$

Fig. 8

Fig. 9

EP 4 214 954 B1

Fig. 10

Fig. 11

Fig. 12

# EP 4 214 954 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9839005 B2

- US 2019068443 A1

**Non-patent literature cited in the description**

- **M. TAYYAB** ; **X. GELABERT** ; **R. JÄNTTA**. A Survey on Handover Management: From LTE to NR.. *IEEE Access*, August 2019
- **S. NEIL** ; **H. DAVID** ; **G. IAN** ; **I. JAMES** ; **A. ROBERT**. Parameter Optimization for LTE Handover using an Advanced SOM Algorithm. *2006 IEEE 63rd Vehicular Technology Conference*, 2013
- **KUMARI, S.** ; **SINGH, B.** Data-driven handover optimization in small cell networks. *Wireless Netw*, 2019, vol. 25, 5001-5009, https://doi.org/10.1007/s11276-019-02111-6

- **J. SHODAMOLA** ; **U. MASOOD** ; **M. MANALASTAS** ; **A. IMRAN**. A Machine Learning based Framework for KPI Maximization in Emerging Networks using Mobility Parameters. *2020 IEEE International Black Sea Conference on Communications and Networking (BlackSeaCom)*, 2020, 1-6
- **M. TAYYAB** ; **X. GELABERT** ; **R. JÄNTTA**. A Survey on Handover Management: From LTE to NR. *IEEE Access*, August 2019